(19) Europäisches Patentamt
European Patent Office
Office européen des brevets

(11) **EP 3 798 278 B1**

(12) # EUROPÄISCHE PATENTSCHRIFT

(45) Veröffentlichungstag und Bekanntmachung des Hinweises auf die Patenterteilung:
**09.10.2024 Patentblatt 2024/41**

(21) Anmeldenummer: **20201459.3**

(22) Anmeldetag: **30.03.2017**

(51) Internationale Patentklassifikation (IPC):
**C09D 167/00** (2006.01)  **C09C 1/00** (2006.01)
**C09C 1/62** (2006.01)  **C09C 1/64** (2006.01)
**C08K 9/08** (2006.01)  **C09D 167/02** (2006.01)

(52) Gemeinsame Patentklassifikation (CPC):
**C09C 1/0015; C09C 1/0021; C09C 1/62; C09C 1/627; C09C 1/644; C09C 1/648; C09D 167/02;** C01P 2002/72; C01P 2002/86; C01P 2002/88; C01P 2004/61; C08K 9/08; C09C 2200/1054; C09C 2200/301; C09C 2200/303;

(Forts.)

(54) **MIT ORGANISCHEN BINDEMITTELN FÜR PULVERLACKE BESCHICHTETE EFFEKTPIGMENTE; SOWIE EIN VERFAHREN ZUR HERSTELLUNG DIESER BESCHICHTETEN EFFEKTPIGMENTE UND IHRE VERWENDUNG**

EFFECT PIGMENT COATED WITH BINDING AGENTS FOR POWDER COATINGS, METHOD FOR ITS PREPARATION AND USE

PIGMENT A EFFET REVETU DE LIANTS POUR PEINTURE EN POUDRE, SON PROCEDE DE PROUDCTION ET UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2016 EP 16000730**

(43) Veröffentlichungstag der Anmeldung:
**31.03.2021 Patentblatt 2021/13**

(62) Dokumentnummer(n) der früheren Anmeldung(en) nach Art. 76 EPÜ:
**17714642.0 / 3 436 536**

(73) Patentinhaber: **ECKART GmbH**
**91235 Hartenstein (DE)**

(72) Erfinder: **SCHREIBER, Burkhard**
**91235 Hartenstein (DE)**

(74) Vertreter: **Altana IP Department**
**Altana Management Services GmbH**
**Abelstraße 45**
**46483 Wesel (DE)**

(56) Entgegenhaltungen:
**DE-A1- 10 243 438   DE-A1- 102005 032 346**
**US-A- 4 471 108   US-B1- 6 635 721**

(52) Gemeinsame Patentklassifikation (CPC): (Forts.)
C09C 2200/405; C09C 2200/406; C09C 2220/106

## Beschreibung

Die Erfindung betrifft die Beschichtung von Effektpigmenten mit organischen Bindemitteln durch eine spontane Fällung, sowie ein Verfahren zur Herstellung dieser beschichteten Effektpigmente und ihre Verwendung.

Effektpigmente finden vielfach Verwendung in der Pigmentierung von Farben, Lacken, Pulverlacken, Druckfarben, Kunststoffen oder Kosmetika. Die Einbringung und Benetzung dieser Pigmente in Bindemittelsysteme bereitet vielfach Probleme, insbesondere bei Pulverlacken.

Effektpigmente können nicht - wie bei organischen oder anorganischen Buntpigmenten üblich - durch Extrusion und anschließende Zerkleinerung des Extrudates in Pulverlacke eingearbeitet werden, da hierdurch die plättchenförmigen Pigmente gebrochen und ihren optischen Effekt verlieren würden. Stattdessen verwendet man sogenannte Dry-blend- oder Bonding-Verfahren.

Unter Dry-blend-Verfahren versteht man einen einfachen Mischvorgang, bei dem handelsübliche Pulverlacke und Effektpigmente trocken miteinander vermengt werden. Optional können weitere Additive wie z.B. Rieselmittel dem Mischprozess zugegeben werden. Nachteilig ist, dass solche Trockenmischungen u.a. aufgrund der unterschiedlichen spezifischen Gewichte und des elektrostatischen Aufladeverhaltens während der Pulverlackbeschichtung zur Separation von Effektpigment und Bindemittel führen. Die Recyclierbarkeit des Pulverlackes, die an und für sich eine der großen Vorteile von Pulverlacksystemen darstellt, ist bei nach diesem Verfahren hergestellten, mit Effektpigmenten pigmentierten Pulverlacken nicht mehr gegeben.

Unter Bonding-Verfahren versteht man einen Mischvorgang von einem handelsüblichen Pulverlack und Effektpigment, bei dem durch Erwärmen der Mischung eine physikalische Anbindung der Effektpigmentteilchen an die Pulverlackteilchen erreicht wird. Bei dem Bonding-Verfahren erfolgt mithin eine Anhaftung der Effektpigmente an der Oberfläche der Pulverlackteilchen. Gebondete Effektpigmente weisen eine geringere Farbtonveränderung auf, da es nur noch zu einer stark reduzierten Separation von Pulverlack und Effektpigment während der Applikation kommt. Nachteilig ist jedoch zum einen, dass das Bondingverfahren ein sehr "handwerkliches" Verfahren ist, welches sehr viel Erfahrung und know-how erfordert. So sind lokale Überhitzungen im Reaktor möglich, die dann zu einer unerwünschten Härtungsreaktion des Pulverlacks führen. Die entstehende Anbackungen im Reaktor müssen dann aufwendig entfernt werden. Bei nicht vollständiger Entfernung der Anbackungen durch eine dem Prozess nachgeschaltete Schutzsiebung kann es zu Stippenbildung im Lack kommen. Weiterhin lassen sich im Bondingverfahren abhängig von der Teilchengröße nur max. ca. 7 Gew.-% Effektpigment einbringen. Insbesondere bei größeren Pigmenten (D50 > 35 $\mu$m) sind diese geringen Mengen vielfach nicht ausreichend, um eine hinreichende Deckkraft zu erzielen.

Sowohl beim Dry-blend- als auch beim Bonding-Verfahren ist nachteilig, dass die Effektpigmente nicht vollständig von dem Bindemittel umhüllt sind und mithin ohne Bindemittelumhüllung auf ein Substrat aufgebracht werden. Bei dem anschließenden Härtungsprozess, üblicherweise einem Einbrennprozess, kommt es zu keiner vollständigen Benetzung dieser Pigmente mit dem Bindemittel. Hierdurch werden z.B. Metalleffektpigmente nach der Aushärtung des Pulverlackes nicht vollständig vom Bindemittel umgeben und erfahren dadurch auch nicht einen optimalen Korrosionsschutz.

Weiterhin ist bei gebondeten Effektpigmenten nachteilig, dass sie zum Teil eine begrenzte Lagerstabilität aufweisen. Da die Bindemittel prinzipiell reaktionsfähig sind, können diese Produkte bei längeren Standzeiten, insbesondere bei höheren Temperaturen in den Sommermonaten oder in heißen Gegenden, aufgrund einer teilweise einsetzenden Vernetzung des Bindemittels agglomerieren und damit nicht mehr gebrauchsfähig sein.

Eine Alternative zu gebondeten Produkten wurde in der EP 1 699 884 B1 und in der EP 1 893699 B1 vorgeschlagen. Hier wird ein reaktives Bindemittel mit dem korrespondierenden Härter durch Sprühtrocknung auf die plättchenförmigen Metall- bzw. Perlglanzeffektpigmente aufgebracht. Hierzu werden die Komponenten notwendigerweise zuvor in einem geeigneten organischen Lösemittel gelöst. Das Bindemittel-Härter-System ist im Zustand der Beschichtung nicht ausgehärtet. Es wird vielmehr erst nach einem dry-blend-Prozess zusammen mit dem Pulverlack ausgehärtet.

Diese Produkte weisen die Vorteile gebondeter Produkte sowie im Fall der Metalleffektpigmente eine verbesserte Beständigkeit in einschlägigen Chemikalientests und im Mörteltest im Vergleich zu den eingesetzten Metalleffektpigmenten sowie eine besondere Optik (3-D Effekt) auf (U. Hirth, A. Albrecht and B. Schreiber, 1 PPCJ December 2008).

Dennoch leiden diese Produkte an einer verhältnismäßig geringen Lagerstabilität. Zusätzlich sind bei der Herstellung dieser Pigmente aufgrund des aufwendigen Herstellungsprozesses nur begrenzte Mengen unter relativ hohen Herstellkosten produzierbar.

Daher besteht ein Bedarf an beschichteten Effektpigmenten, die wie gebondete Produkte eine reduzierte Separation von Effektpigment und Pulverlack haben und gegenüber dem Stand der Technik eine verbesserte Lagerstabilität aufweisen.

In der DE 10 2008 060 228 A1 oder der US 7,578,879 B2 wurden Effektpigmente beschrieben, die mit LCST- und UCST-Polymeren beschichtet wurden. Ein LCST Polymer ist ein Polymer, welches in einem Lösemittel bei niedrigen Temperaturen löslich ist und oberhalb einer bestimmten Temperatur unlöslich wird. Ein UCST Polymer ist ein Polymer, welches in einem Lösemittel bei hohen Temperaturen löslich ist und unterhalb einer bestimmten Temperatur unlöslich wird. Hierbei handelt es sich jedoch um bereits ausgehärtete Polymere und keine Bindemittel. Weiterhin sind diese Bindemittel keine, welche Polyesterfunktionen aufweisen. Zudem beinhaltet die Lehre dieser Dokumente eine nachfolgende Reaktion zur Immobilisierung der Polymere auf der Effektpigmentoberfläche.

Diese Pigmente weisen keine geeignete Deckkraft auf und neigen zur Agglomeration.

In der EP 1332182 B1 wurde die Fällung von Polymeren auf Pigmente aus einer Dispersion der Pigmente mit dem Polymer in einem Lösemittel, in dem die Polymere löslich sind, durch Zugabe eines Lösemittels, in dem die Polymere unlöslich sind, beschrieben. In der DE 2603211 wurde das umgekehrte Verfahren offenbart: Eine Dispersion eines Pigments oder Perlglanzpigments und eines Polymers in einem für das Polymer gut lösliche Lösungsmittel wurde zu einem Lösemittel, in welchem das Polymer schlecht löslich ist, gegeben. Weiterhin wurde ein ähnliches Verfahren für den Einsatz von Pigmentkonzentraten in Kunststoffen in der DE 1544830 offenbart.

Es fallen hierbei jedoch keine kristallinen Polymerschichten aus. Außerdem bilden sich bei Durchführung dieser Fällungsverfahren stark agglomerierte Niederschläge aus, die eine Weiterverarbeitung praktisch unmöglich machen. Im Fall von Effektpigmenten werden klebrige Pulver erhalten, die wenig geeignet zur Anwendung sind.

Weiterhin bekannt sind Effektpigmente, insbesondere Metalleffektpigmente, die mit Polymerschichten beschichtet sind, die in-situ aus Monomeren in einer Flüssigphase auf die Effektpigmente polymerisiert werden. Die meisten bekannten Systeme sind oder umfassen Polyacrylate (EP 2479224 A1, US 20120065298 A1, EP 2115075 A1, EP 1950257 A1, EP 1837380 A1, EP 477433 B1). Manche dieser Pigmente werden vor der Polyacrylatbeschichtung mit einer Metalloxidschicht beschichtet (US 20090117281 A1, EP 2688962 A1, EP 2773704 A1). Hierbei werden immer auch mehrfachfunktionelle Acrylatmonomere verwendet (Vernetzer). Die damit gebildeten Polymerschichten sind nicht-kristallin. Diese Produkte weisen eine recht gute Aufladbarkeit und oft eine hohe Chemikalienstabilität im Pulverlack auf.

Dennoch werden derartig beschichtete Pigmente im Pulverlack meist im Dry-blend Verfahren eingesetzt und weisen daher die entsprechenden Nachteile wie zu hohe Separation auf. Eine Anwendung im Bonding-Verfahren ist umständlich, da der zusätzliche Polymerisationsschritt das Verfahren unnötig verkompliziert und verteuert.

Weiterhin sind teilkristalline oder amorphe Polyester als Bindemittel für Pulverlacke bekannt, wie z.B. in der US 6,635,721 B1 oder der US 3,371,108 beschrieben. Sie werden durch Polykondensation der entsprechenden einschlägigen Säure- und Alkoholkomponenten in der Schmelze der Ausgangsstoffe (Schmelzpolymeriation) hergestellt. Derartige Polymere kommen aufgrund ihrer Verwendung im Pulverlack und ihres kostengünstigen Herstellungsprozesses während ihres Lebenszyklus nicht mit organischen Lösemitteln in Kontakt.

Es besteht daher ein Bedarf an der Bereitstellung beschichteter Effektpigmente, die die genannten Nachteile nicht aufweisen. Insbesondere sollen die Effektpigmente über sehr gute Lagerstabilität verfügen und die geringe Separationsneigung gebondeter Pigmente aufweisen.

Weiterhin besteht ein Bedarf an einem einfachen und kostengünstigen Verfahren zur Herstellung dieser Pigmente.

Die Aufgabe der vorliegenden Erfindung wurde gelöst durch Bereitstellung eines beschichteten Effektpigments, umfassend ein plättchenförmiges Substrat und eine darauf aufgebrachte Beschichtung umfassend ein Bindemittel für Pulverlack,

**dadurch gekennzeichnet,**

dass es in einem DSC-Diagramm bei einer Vorlaufgeschwindigkeit von 5 °C/min mindestens einen endothermen Peak mit einem Maximum aus einem Bereich von $T_{max}$ = 100 bis 150 °C sowie einer zu diesem Peak zugehörigen Enthalpie $\Delta H$ aus einem Bereich von 15 J/g bis 80 J/g aufweist, wobei die Enthalpie auf die Menge des Bindemittels berechnet wird und wobei das Bindemittel das Polyesterfunktionen aufweist und über eine Schmelzpolymerisation hergestellt wird.

Weitere Ausführungsformen des beschichteten Effektpigments sind in den Unteransprüchen 2 bis 12 beschrieben.

## I Spontane Fällung von Polymeren:

Der vorliegenden Erfindung liegt ein völlig unerwarteter Effekt zugrunde. Dieser Effekt besteht darin, das Polymere in einem organischen Lösemittel bei einer bestimmten Temperatur $T_{lös}$ zunächst gelöst werden. Der Lösevorgang wird üblicherweise durch Hilfsmaßnahmen wie Rühren und/oder Ultraschallbehandlung unterstützt. Nach einer gewissen Zeitspanne $t_{unlös}$ jedoch bildet sich ein Niederschlag des Polymers in der Lösung. Dieser Vorgang geschieht spontan, also ohne Änderung äußerer Parameter wie beispielsweise Temperatur, pH oder durch Salz- oder einer anderen Lösemittelzugabe.

Dieses Verhalten wird im Rahmen dieser Erfindung als "spontane Fällung" des Polymers bezeichnet. Nach Kenntnis des Erfinders ist ein derartiges Verhalten von Polymeren bislang nicht bekannt.

Als spontane Fällung wird erfindungsgemäß auch verstanden, wenn sich die Temperatur geringfügig, beispielsweise aufgrund des Freiwerdens von Lösewärme, ändert. Unter geringfügigen Temperaturänderungen werden hier Änderungen im Bereich von 0 bis 5 °C, bevorzugt 0,5 bis 2 °C verstanden.

Im Stand der Technik lange bekannt ist selbstverständlich die Fällung gelöster Polymere durch Temperaturänderung, Änderung des pH-Wertes oder durch Zugabe von Salzen (Aussalzen). Weiterhin bekannt ist die Ausfällung durch Zugabe eines Lösemittels, in dem das Polymer schlecht löslich ist, zur Polymerlösung. Die letztere Methode wird beispielsweise in der EP 1332182 B1 zur Beschichtung von Pigmenten mit organischen Polymeren verwendet.

Weiterhin bekannt sind UCST- oder LCST-Polymere, bei denen jedoch immer eine Temperaturänderung zwingend erforderlich ist, um ein Ausfällen zu bewirken.

Dier Effekt der spontanen Fällung wird im Rahmen dieser Erfindung ausgenutzt, um Effektpigmente mit organischen Bindemitteln zu beschichten. Bei den Bindemitteln handelt es sich bevorzugt um für Pulverlacke geeignete Bindemittel. Besonders bevorzugt sind die hierfür verwendeten Bindemittel Pulverlackbindemittel.

In besonders bevorzugten Ausführungsformen ist das verwendete Bindemittel ein Bindemittel, welches in einem organischen Lösemittel bei einer Temperatur $T_{unlös}$ spontan ausfällbar ist.

Die Zeitspanne $t_{unlös}$ liegt in geeigneten Ausführungsformen in einem Bereich von ca. einer halben Minute bis 48 Stunden. Dabei werden in dieser Zeitspanne mindestens 50%, bevorzugt 60%, weiter bevorzugt 70%, besonders bevorzugt mindestens 80 % und ganz besonders bevorzugt mindestens 90 % des zuvor gelösten Polymers ausgefällt.

Zeitspannen unterhalb von einer halben Minute sind jedoch für die Beschichtung von Effektpigmenten ungeeignet, da die Fällung zu unkontrolliert erfolgt. Bei Zeiten über 48 h ist der Fällungsvorgang aufgrund der langen Batchzeiten aus Kostengründen nachteilig.

Bevorzugt ist daher, dass mindestens 50 % bevorzugt 60%, weiter bevorzugt 70%, besonders bevorzugt mindestens 80 % und ganz besonders bevorzugt mindestens 90 % des zuvor gelösten Polymers in einem organischen Lösemittel innerhalb einer Zeitspanne $t_{unlös}$ aus einem Bereich von 0,5 h bis 12 h und weiter besonders bevorzugt aus einem Bereich von 1 h bis 10 h sowie ganz besonders bevorzugt aus einem Bereich von 2 h bis 8 h ausgefällt werden.

Ganz besonders bevorzugt werden mindestens 90 % des Bindemittels in einem organischen Lösemittel innerhalb einer Zeitspanne $t_{unlös}$ aus einem Bereich von 2 bis 8 h ausgefällt.

Generell wurde beobachtet, dass die Fällung der Polymere weitgehend quantitativ erfolgt. In der Regel werden 90 bis 100 %, bevorzugt 92 bis 97 % der gelösten Polymere wieder ausgefällt.

Die Temperatur der spontanen Fällung $T_{unlös}$ liegt bevorzugt in einem Bereich von 0°C bis 80 °C, besonders bevorzugt in einem Bereich von 10°C bis 70 °C weiter besonders bevorzugt in einem Bereich von 15 °C bis 50 °C und ganz besonders bevorzugt in einem Bereich von 18 °C bis 30 °C. Bei niedrigeren Temperaturen erfolgt die Ausfällung schneller als bei höheren Temperaturen.

Das für den Lösevorgang verwendete Lösemittel sollte nicht zu unpolar sein. So wurde in unpolaren Lösemitteln wie beispielsweise Tetrachlorkohlenstoff zwar beobachtet, dass sich Bindemittel lösen lassen, nicht jedoch dass sie wieder ausfallen.

Bevorzugte organische Lösemittel sind Lösemittel aus der Gruppe der Ketone und Ester. Besonders bevorzugte Lösemittel sind Aceton, Methylethylketon (MEK), Ethylacetat sowie deren Mischungen.

Der Lösevorgang der Polymere vor der spontanen Fällung erfolgte zwar ohne sichtbare Rückstände, jedoch wiesen die Lösungen stets eine gewisse Opazität auf, was auf das Vorliegen eines kolloidalen Zustands durch Aggregation des gelösten Polymers schließen läßt. In unpolaren Lösemitteln wie beispielsweise Tetrachlorkohlenstoff hingegen, in denen die spontane Fällung nicht auftrat, erhielt man klare Lösungen.

In erfindungsgemäßen Ausführungsformen weist das Bindemittel Polyesterfunktionen auf. Bei besonders bevorzugten Ausführungsformen ist das Bindemittel ein Polyester, welcher als Pulverlackbindemittel einsetzbar ist. Derartige Bindemittel werden über eine Schmelzpolymerisation hergestellt. Dabei werden die Monomeren (Carbonsäure-Funktionen haltige Monomere als Säurekomponente und Alkohol-Funktionen haltige Monomere als Alkoholkomponente) zur Schmelze gebracht und in Gegenwart geeigneter Katalysatoren durch Polykondensation polymerisiert bzw. oligomerisiert. Es entstehen Polyester, die als endständige funktionelle Gruppen Hydroxylgruppen oder Carbonsäuregruppen aufweisen können. Diese Polyester sind naturgemäß nicht völlig ausgehärtet, da sie als Bindemittel im Pulverlack ja nach dem Lackiervorgang beim Einbrennen des Lacks weiter aushärten müssen. Beispiele zur Herstellung derartiger Polyester finden sich in der EP 0521992 B1, US 6,660,398 B1, US 6,635,721 B1, WO 2001/138432 A1, US 6,384,102 B1, WO 2004/083326 A1 und WO 2002/50201 A1.

In weiteren bevorzugten Ausführungsformen enthält der Polyester als Säurekomponente einen Hauptteil aus Monomeren der Gruppe bestehend aus Isophthalsäure und Terephthalsäure und deren Mischungen. In besonders bevorzugten Ausführungsformen enthält das Bindemittel als Säurekomponente zumindest 14 mol-% Isophthalsäure, bezogen auf alle Säurekomponenten.

Bevorzugt beträgt der Anteil an Isophthalsäure und Terephthalsäure 50 bis 100 mol-% und besonders bevorzugt 70 bis 96 mol-%, bezogen auf alle Säurekomponenten.

Als weitere Säurekomponenten, die bevorzugt nicht als Hauptteil enthalten sind, können Adipinsäure, Phtalsäure, Succinsäure, Glutarsäure, Pimelinsäure, Azelainsäure, Sebacinsäure, Fumarsäure, Maleinsäure, 1,3-Cyclohexandicarbonsäure, 1,4-Cyclohexandicarbonsäure und Mischungen dieser Verbindungen vorhanden sein. Weiterhin können in kleinen Mengen (unter 10 mol-%) als verzweigende Bausteine tri- oder polyfunktionelle Carbonsäuren wie Trimellitsäure oder Pyromellitsäure vorhanden sein.

Hinsichtlich der Alkoholkomponenten des Polyesterbindemittels sind bevorzugt Ausführungsformen solche, die als Alkoholkomponente einen Hauptanteil von Neopentylglycol und/oder 2-Butyl-2-ethyl-1,3-propandiol aufweisen. Der Anteil von Neopentylglycol und/oder 2-Butyl-2-ethyl-1,3-propandiol beträgt bevorzugt 50 bis 100 mol-%, besonders bevorzugt 70 bis 98 mol-% und ganz besonders bevorzugt 80 bis 95 mol-%, bezogen auf alle Alkoholkomponenten. Ganz besonders bevorzugt ist hierbei Neopentylglycol als Hauptalkoholkomponente.

Polyesterbindemittel mit derartigen Alkoholgehalten werden in der Literatur eher den "amorphen" Polyestern zugerechnet (US 6,660,398 B1, US 6635721 B1).

Als weitere Alkoholkomponenten, die bevorzugt in insgesamt weniger als 50 mol-% aller Alkoholkomponenten vorhanden sind, können beispielsweise Ethylenglycol, 1,3-Propylenglycol, 1,4-Butandiol, 1,6-Hexandiol, 2-Methyl-1,3-propandiol, 1,4-Cyclohexanedimethanol, hydrogeniertes Bisphenol A, Neopentylglycolhydroxypivalat und Mischungen dieser Verbindungen vorhanden sein. Weiterhin können in kleinen Mengen (unter 10 mol-%) als verzweigende Bausteine tri- oder polyfunktionelle hydroxylierte Verbindungen, die mindestens drei Hydroxylgruppen aufweisen, wie beispielsweise Trimethylolpropan, Di-trimethylolpropan, Pentaerythritol und Mischungen hiervon vorhanden sein.

In weiter bevorzugten Ausführungsformen liegt hinsichtlich der Alkoholkomponente des Polyesters das Mol-Verhältnis von linearen $\alpha,\omega$-Alkoholen wie beispielsweise Ethylenglycol zu Neopentylglycol und/oder 2-Butyl-2-ethyl-1,3-propandiol unter 20 %, weiter bevorzugt unter 15 %; noch weiter bevorzugt unter 12 % und ganz besonders bevorzugt unter 10 % Polyester mit einem zu hohem Gehalt an linearen $\alpha,\omega$-Alkoholen wie beispielsweise Ethylenglycol haben sich als weniger geeignet für die spontane Fällung erwiesen.

Derartige Polyester sind in der Literatur als eher "amorphe" Polyester bekannt. Polyester mit einem hohen Anteil an eher symmetrischen Monomeren wie beispielsweise linearen $\alpha,\omega$-Alkoholen und/oder einem hohen Anteil an Terephthalsäure sind in der Literatur bekannt als "semikristalline" Polymere (EP 0 521 992 B1, US 4,217,426).

Der spontane Fällungsvorgang der Polymere ist auf eine verstärkte Kristallisation der Polymere, die nach dem Lösen Polymere im Lösemittel einsetzt, zurückzuführen. Dies wird im Folgenden anhand verschiedener Meßmethoden aufgezeigt.

Ohne an eine Theorie gebunden zu sein, wird dies besonders im Fall der für Pulverlack geeigneten Polyesterbindemittel dadurch erklärt, dass diese Polyester aufgrund ihrer Herstellung aus der Schmelze zwar schon gewisse Teilkristallinitäten aufweisen können, jedoch sterisch äußerst gespannt sind. Durch den Lösevorgang erhalten die Polymerketten mehr Bewegungsfreiheit und es können sich geeignete Polymersegmente finden und kristalline Bereiche bilden. So wird das Polymer schließlich unlöslich und fällt aus.

Bemerkenswert und völlig überraschend geschieht dies ohne weitere Änderung äußerer Parameter.

Dies ist insbesondere erstaunlich im Fall von Polyestern mit einem hohen Anteil an Neopentylglykol als Alkoholkomponente und/oder einem hohen Anteil an Isophthalsäure als Säurekomponente, da gerade diese Bindemittel in der Literatur als amorphe Polyester beschrieben wurden (US 6,660,398 B1, EP 0521992 B1).

**II Charakterisierung der Polymere**

**IIa DSC-Messungen:**

Differential Scanning Calorimetry (DSC) ist eine Standardmethode zur Untersuchung von Polymeren. Anhand der spezifischen Energie von endothermen Schmelzpeaks kann der Kristallinitätsgrad abgeschätzt werden. Allerdings ist zur Bestimmung eines genauen Kristallinitätsgrads stets eine Standardisierung anhand bekannter Polymerer mit ähnlicher Struktur nötig.

Die Lage von Schmelzpeaks werden in dieser Erfindung hauptsächlich durch das Temperaturmaximum $T_{max}$ bestimmt. Die erfindungsgemäß gefällten Polymere können auch Schmelzpeaks mit mehreren Maxima aufweisen. In diesem Fall wird $T_{max}$ für den höchsten Peak gewählt, Sollten zwei Peaks weitgehend gleiche Intensitäten aufweisen (+/- 5%), so wird der Mittelwert der beiden Maxima genommen.

Die erfindungsgemäß mit Bindemitteln beschichteten Effektpigmente weisen in einem DSC-Diagramm bei einer Vorlaufgeschwindigkeit von 5 °C/min erfindungsgemäß mindestens einen endothermen Peak mit einem Maximum aus einem Bereich von $T_{max}$ = 100 bis 150 °C sowie einer zu diesem Peak zugehörigen Enthalpie $\Delta H$ aus einem Bereich von 15 J/g bis 80 J/g auf, wobei die Enthalpie auf die Menge des Bindemittels berechnet wird.

Dieser endotherme Peak wird dem Schmelzvorgang der kristallinen Anteile des Bindemittels zugeordnet.

Weiter bevorzugt liegt $T_{max}$ in einem Bereich von 110 bis 140°C. Weiterhin bevorzugt liegen die Schmelzenthalpien in einem Bereich von 20 - 70 J/g und besonders bevorzugt in einem Bereich von 30 - 65 J/g, wobei die Enthalpie auf die Menge des Bindemittels berechnet wird.

Die Lagen $T_{max}$ der Schmelzenthalpien sind im Fall von Polyesterbindemitteln erstaunlich. Nimmt man von den nicht gefällten Bindemitteln ein DSC auf, so erhält man im ersten DSC Vorlauf im Fall der bevorzugten Polyesterbindemittel einen eher kleinen Peak mit einem $T_{max}$ von ca. 65 bis 72 °C.

Dieser Peak dürfte auf gewisse kleine Anteile kristalliner Bereiche des Polymers zurückzuführen sein.

Mithin weisen die erfindungsgemäß mit Bindemittel beschichteten Effektpigmente eine Erhöhung der Schmelzenthalpie im DSC $\Delta T_{Max}$ vom kristallisierten Zustand im Vergleich zum unkristallisierten Zustand aus einem Bereich von 40 bis 75 °C auf und bevorzugt aus einem Bereich von 50 bis 70 °C auf.

Die Höhe der Schmelzenthalpien der nicht gefällten Bindemittel, bevorzugt Polyesterbindemittel, $\Delta H_{AGM}$ liegt in einem Bereich von nur ca. 5 bis 10 J/g.

Mithin weisen die erfindungsgemäß mit Bindemittel beschichteten Effektpigmente ein Verhältnis der endothermen Schmelzenthalpien $\Delta H/\Delta H_{AGM}$, die mittels des Vorlaufs einer DSC-Messung bei einer Vorlaufgeschwindigkeit von 5 °C/min bestimmbar sind und die auf die Menge an Bindemittel bezogen werden, nach der Fällung ($\Delta H$) im Verhältnis zum Bindemittel vor der Fällung ($\Delta H_{AGM}$) in einem Bereich von 2 bis 10 auf. Bevorzugt liegt dieses Verhältnis in einem Bereich von 3 bis 8 und ganz besonders bevorzugt in einem Bereich von 4 bis 7,5.

**IIb Pulverdiffraktometrie (PXRD):**

Die Pulverdiffraktometrie in der Debye-Scherrer Geometrie ist ein übliches Verfahren zur Bestimmung des Kristallinitätsgrads von Polymeren. Dabei ist Voraussetzung, dass die Probe räumlich statistisch verteilt vorliegt und möglichst keine Vorzugsrichtungen aufweist. Es können mit dieser Methode nur kristalline Anteile ab einer bestimmten Größe detektiert werden, da bei zu kleinen Kristalliten keine Beugung stattfindet.

Bevorzugt werden die PXRD-Diffraktogramme aufgenommen in der Debye-Scherrer Geometrie mit einer Kapillare mit 0,3 mm Durchmesser, wobei als Röntgenquelle Cu K$\alpha$1 und als Monochromator Germanium(111) mit einer Schlitzbreite von 0,5 mm verwendet wird.

Alle diese Parameter beeinflussen die Breite der erhaltenen Peaks.

Erfindungsgemäß beschichtete Effektpigmente weisen hierbei strukturierte Diffraktogramme auf. Die Peaks können hierbei dem (teil)kristallinen Bindemittel zugeordnet werden. Dabei weisen diese Peaks Halbwertsbreiten im Bereich von 0,7 bis 2,0° (in 2$\theta$) auf.

Von den ungefällten Polymeren hingegen werden keine strukturierten Spektren erhalten.

**IIc $^{13}$C-MAS NMR-Spektroskopie und Relaxation:**

Da die NMR Relaxationsmessung an Festkörpern zwar in der wissenschaftlichen Literatur zur Charakterisierung von kristallinen und amorphen Anteilen von Polymeren gut bekannt ist, jedoch in der Patentliteratur weniger häufig erwähnt wird, erfolgt zunächst eine allgemeine Beschreibung der Methode.

**MAS-Spektroskopie:**

Für die Festkörper NMR-Spektroskopie ist der Einfluß starker Kern-Kern Wechselwirkungen, die das Spektrum beeinflussen, charakteristisch. In der Flüssigkeits-NMR werden diese Wechselwirkung weitgehend durch die Brown'sche Molekularbewegung ausgemittelt. Dies resultiert in engen Resonanzlinien, der tiefgehende Informationen über die chemische Zusammensetzung der untersuchten Probe entnommen werden können. Für Materialien in kondensierter Phase (Festkörper), bei der feste Strukturen vorliegen, ist die Brown'sche Molekularbewegung schwach oder gar nicht vorhanden. Folglich sind die Wechselwirkungen der Spins stets vorhanden, was zu strukturlosen, sehr breiten NMR-Spektren führt. Unter diesen Wechselwirkungen spielen die dipolare Wechselwirkung, die chemische Verschiebungsanisotropie und Quadrupolwechselwirkungen die größte Rolle. Da die Quadrupolwechselwirkungen nur für Kerne mit einem Kernspin I > 1 eine Rolle spielen, können sie bei der $^{13}$C NMR vernachlässigt werden (analog zu $^1$H ist für $^{13}$C der Spin = ½).

Die chemische Verschiebungsanisotropie (engl. Chemical shift anisotropy, abgekürzt CSA) beschreibt den Unterschied der chemischen Verschiebung des NMR-Signals zwischen isotropen und anisotropen Zuständen. Die chemische Verschiebung ist bekanntlich ein Maß für das lokale magnetische Feld eines bestimmten Atomkerns, welches ein bestimmtes magnetisches Moment hervorruft. In der Flüssigkeits-NMR sind die chemischen Verschiebungen von Polymeren aufgrund der schnellen Konformationsänderungen um die chemischen Bindungen des Polymers meist gemittelte Werte aller möglichen Konformationen. In Festkörpern wird die chemische Verschiebung - also die Wechselwirkung zwischen dem Kernspin und der Elektronen in den Molekülorbitalen - durch jeden strukturellen Wechsel beeinflußt. Daher beinhaltet sie wertvolle Informationen nicht nur über die chemischen Identitäten, sondern zusätzlich auch über molekulare Orientierungen der beteiligten Molekülgruppen.

Die dipolaren Wechselwirkungen, auch dipolare Kopplungen genannt, beschreiben die direkten Wechselwirkungen zweier Spins mit magnetischem Moment. Im Fall eines $^{13}$C-Kerns und einem daran gebundenen Proton ($^1$H) hängt die dipolare Kopplung vom Abstand r ($\sim 1/r^3$) und ihrer Orientation ($\theta$) relativ zum externen magnetischen Feld B$_0$ ab [Isao Ando, Tetsuo Asakura, Solid State NMR of Polymers, Vol. 84].

Um diese Effekte zu reduzieren wurde 1958 eine neue Methode durch Andrew et al. vorgestellt [E.R. Andrew, A. Brandbury, R.G. Eades, Nature 1959, 183, 1802.]. Diese neue Technik (MAS für magic angle spinning) bestand darin, dass die Probe in einen keramischen Rotor vermessen wird, der in einem bestimmten, den "magischen", Winkel $\theta_m$ rotiert, wobei die Rotationsfrequenz $v_{rot}$ ~1kHz bis 70 kHz beträgt. Der magische Winkel $\theta_m$, ist jener Winkel zwischen der Rotationsachse und dem externen magnetischen Feld $B_0$, bei dem der die mittleren räumlichen Orientierungen repräsentierenden Term $\cos^2 \theta_m = 1/3$ gültig ist. Er beträgt genau 54,74°. Bei diesem Winkel werden Spin Wechselwirkungen, die die NMR Linien verbreitern, partiell ausgemittelt, so dass sich die Linienbreite deutlich reduziert. Sie beträgt jedoch noch das ca. 10- bis 100-fache der Linienbreite entsprechende Signale der Flüssigkeits-NMR. Geometrisch läßt sich der magische Winkel beschreiben als der Winkel der Diagonalen zur Kante eines Würfels. Charakteristisch für ein MAS NMR Spektrum ist die Präsenz einer zentralen Linie bei der Position der isotropen chemischen Verschiebung sowie Seitenbanden, die sogenannten "Rotationsseitenbanden" (ssb). Die Rotationsseitenbanden (ssb) erscheinen immer bei ganzzahligen Vielfachen der Rotationsfrequenz $v_{rot}$. Sie werden immer mit einem hochstehenden Stern (*) im Spektrum bezeichnet.

Im Fall einer Polymerprobe mit vielen Resonanzen erschweren die Überlappungen der Rotationsseitenbanden mit den eigentlichen Signalen der chemischen Verschiebungen von verschiedenen chemischen Gruppen die Auswertungen der aufgenommenen Spektren. Daher wird üblicherweise eine Rotationsfrequenz verwendet, bei der zumindest die zentralen Linien relevanter chemischer Gruppen frei von Überlappungen sind. Hierbei werden üblicherweise höhere Rotationsfrequenzen die Rotationsseitenbanden aus dem Spektrum entfernen. Für Gruppen mit großer chemischer Anisotropieverschiebung (beispielsweise für Polymere mit COO-Gruppen) werden hohe Rotationsfrequenzen verwendet und/oder spezielle Techniken zur Unterdrückung der Rotationsseitenbanden [W. T. Dixon, J. Chem. Phys., 77, 1800 (1982); O. N. Antzutkin, Z. Song, X. Feng, and M. H. Levitt. J. Chem. Phys., 100, 130 (1994)].

Generell reichen Rotationsfrequenzen von einigen kHz bis zu 20 kHz aus, um die dipolaren Wechselwirkungen zwischen $^{13}$C-Kernen und daran gebundenen Protonen auszumitteln. Dipolare Wechselwirkungen zwischen $^1$H-Kernen untereinander sind noch stärker, so dass höhere Rotationsfrequenzen bis zu 70 kHz verwendet werden müssen. Aufgrund dessen erfordert die $^1$H MAS Festkörper-NMR einen extrem hohen Materialaufwand und wird daher selten angewendet. Im Fall von Polymeren hat sich die $^{13}$C MAS NMR seit längerem als empfindlich genug herausgestellt, um Strukturen und dynamische Prozesse zu untersuchen. Da $^{13}$C-Kerne eine deutliche geringere natürliche Häufigkeit als $^1$H-Kerne aufweisen, sind Techniken gebräuchlich, bei der die Magnetisierungen der häufigeren Spezies (bei Polymeren daher meist $^1$H) zur seltenen Spezies ($^{13}$C) übertragen werden. Eine der gebräuchlichsten Techniken ist hierbei die Hartmann-Hahn Kreuzpolarisation, bei der Magnetisierungen der angeregten Protonenkerne auf die $^{13}$C-Kerne übertragen werden. In diesem Fall kann als maximale Steigerung der Sensitivität, die durch das gyromagnetische Verhältnis in involvierten Kerne gegeben ist ($\gamma_H/\gamma_C$), von einem Faktor 4 erreicht werden [S.R. Hartmann, E.L. Hahn, Phys. Rev. 1962, 128, 2042].

In einem Kristall liegen die Moleküle in inäquivalenten Positionen oder eingefrorenen Konformationen vor. Das Festkörper MAS NMR Spektrum wird hier mehr Signale mit leicht veränderten chemischen Verschiebungen aufweisen, während in einem Lösemittel-NMR die Signale äquivalent wären. Dieser Effekt kann in der Festkörper NMR zur Untersuchung von Tautomerie und ihren dynamischen Änderungen verwendet werden [F. Laupretre, L. Monnerie, J. Virlet. Macromolecules 17 (1984) 1397].

Für amorphe Polymerproben unterhalb des Tg wird die relative große Unordnung der Ketten breitere NMR Banden hervorrufen als bei kristallinen Proben. Die Unterschiede zwischen den breiten NMR Signalen für die amorphen und schmaleren Signalen für die kristallinen Phasen könne zur Bestimmung des Polymerisationsgrads der Polymeren verwendet werden [Isao Ando, Tetsuo Asakura, Solid State NMR of Polymers, Vol. 84]. Da sich die Kettenkonformationen in amorphen und kristallinen Phasen der Polymere unterscheiden, werden auch ihre NMR-Spektren und ihr dynamisches NMR-Verhalten unterscheiden. Für semikristalline Polymere kann das dynamische Verhalten als Kriterium herangezogen werden, um das Verhalten der amorphen Phase mit hoch mobilen Ketten und jenem der kristallinen Phase mit sehr eingeschränkter Bewegungsfreiheit der Ketten zu unterschieden. Einer der Methoden, die intensiv verwendet wird, ist die $T_1$ longitudinale Relaxationstechnik [W. S. Veeman. E. M. Mengen H. H. C. de Moor, Proc. IUPAC I.U.P.A.C. Macromol. Svmp. 28rh. 1982. 2; F. C. Schilling, F. A. Bovery, A. E. Tonelli. Polvm. Marer. Sci. Eng. 50 (1984) 256, D. A. Torchia. J. Magn. Reson. 30 (1978) 613.].

## $^{13}$C-MAS NMR- Relaxation:

Die longitudinale Relaxation oder Spin-Gitter-Relaxation ist der Mechanismus, der die Entwicklung des Magnetisierungsvektors in einem Spinsystem hin zum Gleichgewicht, welches bei Parallelität des Magnetisierungsvektors mit dem äußeren Feld $B_0$ gegeben ist, beschreibt. Durch einen geeigneten $90_x.°$-Puls wird die makroskopische Magnetisierung $M_0$ im rotierenden Koordinatensystem, die definitionsgemäß im Gleichgewichtszustand in z-Richtung (parallel zum äußeren Magnetfeld) zeigt, in die y'-Richtung verschoben. Die Besetzungsverhältnisse der betroffenen Energieniveaus ändern sich dahingehend, dass eine Gleichbesetzung stattfindet anstelle der im Ruhezustand geltenden Besetzung nach einer Boltzmann-Verteilung. Anschließend erfolgt eine Relaxation in den Gleichgewichtszustand gemäß einer Exponentialfunktion mit der Zeitkonstante $T_1$.

Aufgrund der hohen Mobilität der Ketten in der amorphen Phase ist $T_1$ wesentlich kürzer als die Relaxationszeit in der kristallinen Phase. Dieser Effekt bewirkt, dass im Fall eines semikristallinen Polymers die Relaxationskurve nicht mehr durch eine einfache exponentielle Funktion des Typs [Bloch F. Phys. Rev. 1946; 70: 460-474.]:

$$M(t) = M_0(1 - e^{-\frac{t}{T_1}}) \qquad (I)$$

beschrieben werden kann. Vielmehr muß hier eine biexponentielle Funktion verwendet werden, um die schnelle Relaxationszeit $T_1^s$ des amorphen Anteils von der langsamen Relaxationszeit $T_1^l$ des kristallinen Anteils zu trennen:

$$M\left(t, M_0, a, c, T_1^s, T_1^l\right) = M_0 \cdot \left[ (1-c) \cdot \left( 1 - a \cdot e^{-\left(\frac{t}{T_1^s}\right)} \right) + c \cdot \left( 1 - a \cdot e^{-\left(\frac{t}{T_1^l}\right)} \right) \right] \qquad (II)$$

Hierbei gelten folgende Zuordnungen:

$M_0$: Gleichgewichtsmagnetisierung

$M(t, M_0, a, c, T_1^s, T_1^l)$: Magnetisierung zum Zeitpunkt t

c: Anteil des kristallinen Polymers als Molenbruch

t: Zeit nach dem 90°-Impuls

a: Dieser Parameter berücksichtigt von Null verschiedene Anfangsmagnetisierungen und ist für die Bestimmung des kristallinen Anteils in den Polymeren und beschichteten Al-Partikeln nicht relevant. Parameter a spiegelt die Effizienz des Sättigungsblocks und der Basislinienkorrektur wieder und sollte bei vollständiger Elimination der Magnetisierung bei t = 0 nahe 1,0 liegen.

$T_1^s$: Spin-Gitter Relaxationszeit "short": Relaxationszeit amorpher Anteile

$T_1^l$: Spin-Gitter Relaxationszeit "long": Relaxationszeit kristalliner Anteile

Zwischen den 90°-Pulsen werden geeignete Wartezeiten eingelegt.
Insgesamt ist diese Methode sehr empfindlich in Bezug auf die Detektion kristalliner Anteile eines Polymers. Da die Methode immer molekular zu deuten ist, können bereits sehr kleine kristalline Domänen im Polymer detektiert werden.

**IId $^{13}$C-NMR MAS Messungen an Polymeren und an erfindungsgemäß beschichteten Effektpigmenten**

Die experimentellen Details der durchzuführenden Messungen finden sich im experimentellen Teil.
Die erfindungsgemäß beschichteten Effektpigmente zeichnen sich dadurch aus, dass das Bindemittel einen kristallinen und einen amorphen Anteil aufweist, der mittels $^{13}$C-NMR MAS Relaxationsmessungen bestimmt wird, wobei die Relaxation der $^{13}$C-Kerne als biexponentielle Relaxation gemäß der Formel

$$M\left(t, M_0, a, c, T_1^s, T_1^l\right) = M_0 \cdot \left[ (1-c) \cdot \left( 1 - a \cdot e^{-\left(\frac{t}{T_1^s}\right)} \right) + c \cdot \left( 1 - a \cdot e^{-\left(\frac{t}{T_1^l}\right)} \right) \right] \qquad (II)$$

gefittet wird, wobei der Kristallinitätsgrad c in einem Bereich zwischen 40 bis 85 % liegt und wobei eine kurze durchschnittliche Relaxationszeit $T_1^s$ und eine lange durchschnittliche Relaxationszeit $T_1^l$ vorhanden sind und wobei $T_1^l$ in einem Bereich von 65 bis 130 s liegt.
In anderen Ausführungsformen weist das Bindemittel einen Kristallinitätsgrad c von 45 bis 75 % auf.

In bevorzugten Ausführungsformen liegt die lange durchschnittliche Relaxationszeit $T_1^I$ in einem Bereich von 70 bis 110 s besonders bevorzugt in einem Bereich von 71 bis 100 s.

**III Effektpigmente:**

Die Effektpigmente werden der Gruppe bestehend aus Metalleffektpigmente, Perlglanzpigmente und Interferenzpigmente sowie deren Mischungen, entnommen.

Die Metalleffektpigmente basieren auf einem plättchenförmigen Metallkern. Unter plättchenförmig wird hierbei ein Metallkern verstanden, dessen Formfaktor (aspect ratio), also das Verhältnis von mittlerer Größe $d_{50}$ zur mittleren Dicke $h_{50}$, größer 5 ist. Weiter bevorzugt sind Metallkerne mit einem Formfaktor von 10 bis 500 und von 40 bis 100.

Metallkerne mit höherem Formfaktor weisen bessere metallische Eigenschaften wie Hell-Dunkelflop oder Glanz auf,

Erfindungsgemäß ist bevorzugt, daß der plättchenförmige Metallkern Metalle aus der Gruppe, die aus Aluminium, Kupfer, Zink, Zinn, Goldbronze, Messing, Eisen, Titan, Chrom, Nickel, Silber, Gold, Stahl sowie deren Legierungen und Gemischen davon besteht, enthalten oder daraus bestehen. Gemäß einer weiteren erfindungsgemäßen Variante ist der plättchenförmige Metallkern ein Aluminium- oder Goldbronzepigment. Besonders bevorzugt sind Aluminiumpigmente.

Die Metalleffektpigmente sind entweder plättchenförmig und im Wesentlichen rund (sogenannter Silberdollar-Typ) oder plättchenförmig und im Wesentlichen "cornflakeartig" geformt (sogenannter Cornflake-Typ).

Der plättchenförmige Metallkern der erfindungsgemäßen Metalleffektpigmente, d.h. ohne nachfolgende Beschichtung mit Polymer, besitzt vorzugsweise eine mittlere Dicke $h_{50}$ von ca. 20 nm bis ca. 2 $\mu$m, weiter bevorzugt von 25 nm bis 1 $\mu$m und noch weiter bevorzugt von 30 nm bis 600 nm.

Der $h_{50}$-Wert bezieht sich auf die Summenhäufigkeitsverteilung der Dickenverteilung. Die Dickenverteilung kann mittels REM-Messungen an 70 bis 100 Pigmenten gemäß der in der WO 2004/087816 A2 (Seiten 24 und 25) beschriebenen Methode bestimmt werden.

Die Größen der erfindungsgemäßen Effektpigmente werden in üblicher Weise mittels der Lasergranulometrie bestimmt. Hierbei wird eine Summenhäufigkeitsverteilung der volumengemittelten Größenverteilungsfunktion erhalten. Dabei gibt der $D_{50}$-Wert jenen Wert an, bei dem 50% der vermessenen Effektpigmente einen volumengemittelten Durchmesser aufweisen, der gleich oder kleiner als der jeweils angegebene Wert ist. Die Auswertung der Streulichtsignale erfolgt nach der Fraunhofer-Theorie, welche auch Brechungs- und Absorptionsverhalten der Partikel beinhaltet. Bevorzugt wird die Größenverteilung wird mit dem Gerät Cilas 1064 der Fa. Quantachrome vermessen.

Die $D_{50}$-Werte der Größenverteilung der erfindungsgemäßen Effektpigmente liegen bevorzugt in einem Bereich von 3 bis 200 $\mu$m, weiter bevorzugt in einem Bereich von 5 bis 100 $\mu$m und besonders bevorzugt in einem Bereich von 8 bis 90 $\mu$m.

In weiteren Ausführungsformen handelt es sich bei dem plättchenförmigen Substrat um ein mit einem Metalloxid beschichtetes Metalleffektpigment oder um ein Perlglanzpigment.

Hierbei wird das Metalloxid bevorzugt der Gruppe bestehend aus Silizium(di)oxid, Siliziumoxidhydrat, Siliziumhydroxid, Aluminiumoxid, Aluminiumoxidhydrat, Aluminiumhydroxid und deren Mischungen, entnommen. Besonders bevorzugt ist Siliziumdioxid ($SiO_2$).

Derartig mit einem Metalloxid vorbeschichteten Metalleffektpigmente ließen sich wesentlich leichter erfindungsgemäß mit dem für Pulverlack geeigneten Bindemittel beschichten. Zudem trägt die Metalloxidbeschichtung zu einer besseren Chemikalienstabilität bzw. Gasungsstabilität des gesamten Effektpigments bei.

Bevorzugt weist das Metalloxid eine geometrische Schichtdicke von mindestens 10 nm auf. Unterhalb dieser Schichtdicke wird die Chemikalienstabilität nicht ausreichend sein.

Die bevorzugte maximale Schichtdicke des Metalloxids liegt bei 200 nm, bevorzugt bei 50 nm.

Bei Schichtdicken oberhalb von 200 nm können die optischen Eigenschaften des Effektpigments nachteilig werden.

In einer besonders bevorzugten Ausführungsform handelt es sich bei dem plättchenförmigen Substrat um ein mit SiOz beschichtetes Aluminiumeffektpigment.

Bei einer erfindungsgemäßen Weiterbildung ist eine Vorbeschichtung des Metallpigmentes mit einer Substanz möglich, die die Haftung zwischen Effekttpigmentoberfläche und dem darauf aufgefälltem Pulverlackharz verbessert. Dies können z.B. funktionalisierte Silane, funktionalisierte Polymere und phosphororganische Verbindungen sein.

Vorzugsweise werden funktionalisierte Silane verwendet. Die Silane besitzen dabei vorzugsweise die allgemeine Formel (III)

$$(Y)R_{(4-z)}Si(X)_z \qquad (III)$$

Bei der Silanverbindung gemäß Formel (III) ist z eine ganze Zahl von 1 bis 3, R ist eine substituierte oder unsubstituierte, unverzweigte oder verzweigte Alkylkette mit 1 bis 12 C-Atomen, Y ist eine funktionelle Gruppe, die mit entsprechenden Funktionalitäten des aufgefällten Polymers reagieren kann und X steht für eine Halogen- und/oder Alkoxygruppe. R kann auch zyklisch mit Si verbunden sein, wobei in diesem Fall z üblicherweise 2 ist. Bevorzugt ist X eine Methoxy oder Ethoxygruppe. Die Gruppe Y kann endständig an den Alkylrest R gebunden sein. Es können auch mehrere Gruppen Y an einem Alkylrest gebunden sein.

Die Silane binden nach einer Kondensationsreaktion der Si(X)-Gruppierung mit oberflächlichen OH-Gruppen der Metallpigmentoberfläche an dieser an. Die reaktive Funktion Y hingegen kann eine Anbindung an das nachträglich aufgefällte Pulverlackbindemittel bewirken. Hierbei kann es sich um kovalente Bindungen oder auch um schwächere Wechselwirkungen wie Wasserstoffbrückenbindungen handeln. Entscheidend ist, dass das Pulverlackbindemittel mittels der als Haftvermittler fungierenden Silane so fest auf der Metallpigmentoberfläche verankert wird, dass es bei einer anschließenden Weiterverarbeitung des Effektpigments z.B. durch Sieben oder der Weiterverarbeitung in einen Pulverlack weitgehend an dem Effektpigment gebunden bleibt. Mithin wirken die Silane als Haftvermittler zwischen der Metallpigmentoberfläche und dem Pulverlackbindemittel der Beschichtung.

Als funktionelle Gruppen Y werden Isocyanat-, Epoxy-, Amino-, Hydroxy-, Carboxy-, Acrylat- oder Methacrylatgruppen bevorzugt. Diese Gruppen reagieren mit entsprechenden chemisch kompatiblen Gegengruppen des Pulverlackbindemittels. Dabei härtet das Bindemittel als solches jedoch nicht aus, d.h. das oligomere/polymere Bindemittel behält seine chemische Vernetzbarkeit bzw. Härtbarkeit bei. Die funktionelle Gruppe Y des Silans kann dabei beispielsweise mit funktionellen Gruppen des Pulverlackbindemittels reagieren, die an der Aushärtung des Pulverlackbindemittels nicht oder nur teilweise beteiligt sind. Beispielsweise kann die funktionelle Gruppe des Pulverlackbindemittels, bezogen auf die funktionelle Gruppe Y des Silans, in einem stöchiometrischen Überschuß vorliegen. Auf der mit wenigstens einer Silanverbindung gemäß Formel (III) vorbeschichteten Metallpigmentoberfläche sind die funktionellen Gruppen (Y) regelmäßig in einem stöchiometrischen Unterschuß, bezogen auf die entsprechende chemisch kompatible funktionelle Gegengruppe des nachträglich aufgebrachten Pulverlackbindemittels.

So kann beispielsweise Y eine Isocyanat- oder eine Epoxygruppe sein, während das Bindemittel Polyesterkomponenten mit Polyol- und Polycarboxyfunktionen umfaßt. Die Isocyanatgruppen können, ggfs unter Zugabe eines Katalysators, bereits bei Raumtemperatur mit OH-Gruppen des Bindemittels abreagieren. Erst nach der Beschichtung des Metallpigmentes und der Einarbeitung in ein Lacksystem härtet dann die Polyesterbeschichtung beim Einbrennen des Lacksystems aus. Die Gruppe Y ist bevorzugt eine endständige Gruppe, da hier die höchste Reaktivität aufgrund der geringsten sterischen Hinderung gegeben ist. Es kann sich aber auch um eine weitgehend endständige Gruppe handeln, bei der noch bis zu 3 C-Atome bis zum Kettenende vor der Y-Funktion vorhanden sein können.

Die Bindemittelfunktionalitäten, die mit Y reagieren, können auch die gleichen sein, die auch bei der Aushärtung des Bindemittels das Polymer aufbauen. Dies ist möglich, da - wie bereits vorstehend ausgeführt - die mit Y reaktiven funktionellen Gruppen des Pulverlackbindemittels regelmäßig in einem stöchiometrischen Überschuß zu der funktionellen Gruppe Y auf der Pigmentoberfläche vorliegen, so dass nach erfolgter Umsetzung der reaktiven Gruppe Y mit dem oligomeren/polymeren Bindemittel noch genügend funktionelle Gruppen an dem oligomeren und/oder polymeren Bindemittel für die Vernetzung bzw. Aushärtung verbleiben. Die mit der reaktiven Gruppe Y reaktive funktionelle Gruppe des Pulverlackbindemittels kann auch verschieden sein von der funktionellen Gruppe bzw. den funktionellen Gruppen, die an der Aushärtung des Bindemittels beteiligt sind.

Als Oberflächenmodifizierungsmittel geeignete organofunktionelle Silane mit entsprechenden funktionellen Gruppen sind kommerziell verfügbar. Beispielsweise sind dies viele Vertreter der von der Fa. Evonik, Rheinfelden hergestellten und unter dem Handelsnamen "Dynasylan®" vertriebenen Produkte bzw. der von der Fa. OSi Specialties produzierten Silquest®-Silane oder von der Fa. Wacker produzierten GENOSIL®-Silane.

Beispiele hierfür sind 3-Methacryloxypropyltrimethoxysilan (Dynasylan MEMO, Silquest A-174NT), 3-Mercaptopropyltri(m)ethoxysilan (Dynasylan MTMO oder 3201; Silquest A-189), 3-Glycidoxypropyltrimethoxysilan (Dynasylan GLYMO, Silquest A-187), tris-(3-Trimethoxysilylpropyl)isocyanurat (Silquest Y-11597), gamma-Mercaptopropyltrimethoxysilan (Silquest A-189), beta-(3,4-Epoxycyclohexyl)ethyltrimethoxysilan (Silquest A-186), gamma-Isocyanatopropyltrimethoxysilan (Silquest A-Link 35, Genosil GF40), (Methacryloxymethyl)trimethoxysilan (Genosil XL 33), Isocyanatomethyl)trimethoxysilan (Genosil XL 43), Aminopropyltrimethoxysilan (Dynasylan AMMO; Silquest A-1110), Aminopropyltriethoxysilan (Dynasylan AMEO) oder N-(2-Aminoethyl)-3-aminopropyltrimethoxysilan (Dynasylan DAMO, Silquest A-1120) oder N-(2-Aminoethyl)-3-aminopropyltriethoxysilan, Triaminofunktionelles Trimethoxysilan (Silquest A-1130), bis-(gamma-Trimethoxysilylpropyl)amin (Silquest A-1170), N-ethyl-gamma-aminoisobytyltrimethoxysilan (Silquest A-Link 15), N-Phenyl-gammaaminopropyltrimethoxysilan (Silquest Y-9669), 4-Amino-3,3-dimethylbutyltrimethoxysilan (Silquest Y-11637), (N-Cyclohexylaminomethyl)triethoxyosilan (Genosil XL 926), (N-Phenylaminomethyl)trimethoxysilan (Genosil XL 973) und deren Mischungen.

Die Silane, vorzugsweise Silane gemäß Formel (I), können direkt auf der metallischen Oberfläche von Effektpigmenten aufgebracht sein. Gemäß einer bevorzugten Weiterbildung sind die Effektpigmente Metallpigmente, die mit einer $SiO_2$-Beschichtung versehen sind, vorzugsweise mit einer $SiO_2$-Beschichtung umhüllt sind, wobei die Silane auf die $SiO_2$-Beschichtung aufgebracht sind. Auf die so vorbeschichteten Metallpigmente wird dann das Pulverlackbindemittel aufgebracht.

**IV Verfahren:**

Ein Verfahren zur Herstellung eines erfindungsgemäß beschichteten Effektpigments umfasst die folgenden Schritte:

a1) Lösen eines Bindemittels, welches spontan fällbar ist, in einem organischen Lösemittel oder Lösemittelgemisch, innerhalb einer ersten Zeitspanne von $t_{Lös}$ bei einer Temperatur $T_{lös}$ aus einem Bereich von 0°C bis 80 °C,

b1) nachfolgend Zugabe eines Effektpigments zum Lösemittel oder Lösemittelgemisch aus a1) unter Dispergierung des Effektpigments,

c1) Beschichtung des Effektpigments mit dem Bindemittel innerhalb einer zweiten Zeitspanne $t_{unlös}$ bei einer Temperatur $T_{unlös}$ aus einem Bereich von 0°C bis 80 °C,

oder

a2) Dispergieren eines Effektpigments in einem Lösemittel oder Lösemittelgemisch,

b2) nachfolgend Zugabe eines Bindemittels, welches spontan fällbar ist, zu dem Lösemittel oder Lösemittelgemisch, welches eine Temperatur $T_{lös}$ aufweist

c2) Beschichtung des Effektpigments mit dem Bindemittel innerhalb einer Zeitspanne $t_{unlös}$,

d) Abtrennung des beschichteten Effektpigments vom Lösemittel oder Lösemittelgemisch und

e) optional Austrocknung des beschichteten Effektpigments.

Demgemäß gibt es zwei Hauptverfahren zur Herstellung der erfindungsgemäß beschichteten Effektpigmente. Beim ersten Verfahren wird zunächst das Bindemittel, welches spontan fällbar ist, in einem organischen Lösemittel oder Lösemittelgemisch gelöst. An und für sich ist die Zeitspanne $t_{Lös}$ nicht wichtig und wird von praktischen Gesichtspunkten bestimmt sein. Bevorzugt liegt die Zeitspanne $t_{Lös}$ in einem Bereich von ca. 0,25 bis 3 h. Der Lösevorgang wird vorteilhaft durch Rühren und/oder Ultraschallbehandlung der Lösung erleichtert.

Die Konzentration des Bindemittels liegt hierbei in einem Bereich von ca. 10 bis 40 Gew.-%, bevorzugt 15 bis 25 Gew.-% bezogen auf die Lösemittelmenge, liegen. Um Lösemittel zu sparen kann man relativ konzentriert arbeiten, allerdings sollte man bedenken, dass sich das Effektpigment noch gut dispergieren läßt.

Der zweite Schritt b1) der Zugabe des Effektpigments zum Lösemittel und der Dispergierung des Effektpigments in der Lösung sollte vorteilhafterweise erfolgen, sobald der Lösevorgang des Bindemittels abgeschlossen ist. Wartet man hier zu lange, so kann bereits eine spontane Fällung des Bindemittels einsetzen.

Das Effektpigment kann vor der Zugabe zum gelösten Polymer bereits als separate Dispersion in einem Lösemittel, bevorzugt im Lösemittel oder Lösemittelgemisch, welches bereits für Schritt a1) verwendet wird, vorliegen. So kann die Zugabe leichter gestaltet werden, beispielsweise durch eine Zudosierung mit hierfür üblichen Geräten. Auch kann auf diese Weise Staubbildung, die im Fall eines Effektpigmentpulvers möglich ist, vermieden werden und die Zugabe erfolgt praktisch rückstandsfrei.

Das zweite Verfahren gestaltet sich noch einfacher und ist erfindungsgemäß bevorzugt. Hier liegt das Effektpigment gemäß Schritt a2) bereits dispergiert im Lösemittel oder Lösemittelgemisch vor.

Es hat sich gezeigt, dass im Schritt a2) der Lösevorgang des zugegebenen Polymers im Lösemittel oder Lösemittelgemisch weitgehend nicht durch das bereits dispergierte Effektpigment beeinflusst wird. Die Fällung auf das Effektpigment in Schritt c2) erfolgt praktisch nahtlos. Die Schritte b2) und c2) können sich auch zeitlich überlagern. Dies ist nicht unbedingt von Nachteil, da noch nicht gelöstes Polymer die Fällung des bereits gelösten Polymers weitgehend nicht beeinträchtigt

Die Zeitspanne $t_{unlös}$ liegt bei Schritt c1) oder c2) in einem Bereich von 0,5 h bis 12 h und weiter besonders bevorzugt aus einem Bereich von 1 h bis 10 h sowie ganz besonders bevorzugt aus einem Bereich von 2 h bis 8 h. Möglich sind auch Zeitspannen von 0,5 h bis 1,5 h. Die Fällung des Polymers erfolgt weitgehend quantitativ, bevorzugt zu 92 bis 100%. Allerdings hat es sich gezeigt, dass nicht immer alles Polymer die Effektpigmente beschichtet; ein gewisser Anteil kann auch als Nebenfällungen vorliegen. Dies ist jedoch insbesondere in Pulverlackanwendungen kein Nachteil.

Die Effektpigmente werden jedoch sehr homogen und in ihrer Fläche weitgehend quantitativ vom Bindemittel beschichtet.

Die Temperatur der Bindemittelfällung $T_{unlös}$ der Schritte c1) oder c2) liegt bevorzugt in einem Bereich von 0°C bis 80 °C, besonders bevorzugt in einem Bereich von 10°C bis zu 5 °C unterhalb des Siedepunkts des Lösemittels oder Lösemittelgemischs weiter besonders bevorzugt in einem Bereich von 15 °C bis 50 °C und ganz besonders bevorzugt in einem Bereich von 18 °C bis 30 °C.

Bei niedrigeren Temperaturen erfolgt die Ausfällung schneller als bei höheren Temperaturen. Vorteilhafterweise liegt die Temperatur bei oder nahe der Raumtemperatur. Dies spart Energieaufwand, der mit Heiz- oder Kühlvorgängen der Dispersion verbunden ist.

Auch die Temperatur $T_{lös}$ für Schritt a1) oder b2) liegt bevorzugt in einem Bereich von 0°C bis 80 °C, besonders bevorzugt in einem Bereich von 10°C bis zu 5 °C unterhalb des Siedepunkts des Lösemittels oder Lösemittelgemischs,

weiter besonders bevorzugt in einem Bereich von 15 °C bis 50 °C und ganz besonders bevorzugt in einem Bereich von 18 °C bis 30 °C. Hier gilt ebenfalls, dass das Arbeiten bei oder nahe der Raumtemperatur die meisten Vorteile bringt.

In besonders bevorzugten erfindungsgemäßen Verfahren liegt die Differenz $\Delta T = T_{unlös} - T_{lös}$ bei beiden Verfahren in einem Bereich von 0 bis 5 °C und mithin liegt eine spontane Fällung vor. Hier ist naturgemäß die Steuerung des Verfahrens besonders einfach, da auf Heiz- oder Kühlschritte weitgehend verzichtet werden kann.

Es können jedoch für $T_{lös}$ oder $T_{unlös}$ auch verschiedene Temperaturen gewählt werden. So kann beispielsweise im ersten Verfahren das Bindemittel bei einer höheren Temperatur gelöst werden, was meist schneller als bei niedrigeren Temperaturen geschieht und anschließend die Fällung bei einer niedrigeren Temperatur erfolgen.

Bei Verfahrensvarianten mit unterschiedlichen Temperaturen für $T_{lös}$ oder $T_{unlös}$ handelt es sich jedoch nicht um ein Verfahren gemäß der LCST- oder UCST-Polymere, da erfindungsgemäß bevorzugt keine LCST- oder UCST-Polymere als Bindemittel eingesetzt werden.

Bevorzugt liegt $t_{unlös}$ in Schritt c1) oder c2) in einem Bereich von 0,5 h bis 12 h und besonders bevorzugt in einem Bereich von 2 bis 8 h. Weiterhin können auch Ausfällzeiten $t_{unlös}$ aus einem Bereich von 1 h bis 2 h gewählt werden.

Liegt $t_{unlös}$ unter 0,5 h, so kann die Fällung unkontrolliert mit einem zu hohen Anteil an Nebenfällungen, d.h. nicht auf die Oberfläche des Effektpigments aufgefälltem Bindemittel, liegen.

Liegt $t_{unlös}$ oberhalb von 12 h so hat man produktseitig keine Nachteile zu erwarten, jedoch wir das an sich höchst einfache Verfahren unnötig lang.

Vorteilhafterweise wählt man ein Lösemittel, bei dem sowohl die Ausfallzeiten $t_{unlös}$ kurz im Bereich von ca. 1 h bis 3 h als auch die Temperaturen $T_{unlös}$ bei oder nahe der Raumtemperatur, bevorzugt bei 18 °C bis 30 °C liegen.

Das zu beschichtende Effektpigment kann in Form einer Paste oder eines Pulvers vorliegen. Metalleffektpigmente liegen häufig herstellungsbedingt in Form einer Testbenzin-haltigen Paste mit einem Festkörperanteil von ca. 50 bis 70 Gew.-% vor. In diesem Fall wird ein weiteres Lösemittel in das System eingetragen, welches relativ unpolar ist. Dies muß den Fällungsvorgang nicht beeinträchtigen, jedoch sollte man in Vorversuchen mit entsprechenden Lösemittelmischungen feststellen, ob das verwendete Bindemittel in diesen Systemen ausfällbar ist.

Bevorzugt liegt das Effektpigment in Form eines Pulvers vor. Hier hat man zum einen besser definierte Bedingungen für die Fällung des Polymers zum anderen jedoch ist es hinsichtlich der Aufarbeitbarkeit des Lösemittels von Vorteil, wenn kein Lösemittelgemisch vorliegt.

Bevorzugt wird für beide Verfahren das organische Lösemittel aus der Gruppe bestehend aus Aceton, Methylethylketon, Ethylacetat sowie deren Mischungen ausgewählt.

Vorteilhafterweise wird man hier auf eine Mischung verzichten und sich für eines der Lösemittel entscheiden.

Für den Fall, dass das Effektpigment ein Metalleffektpigment ist, welches zunächst als Testbenzinhaltige Paste vorliegt, werden die vorstehend bevorzugt genannten Lösemittel in einer Mischung mit Testbenzin vorliegen. In diesem Fall sollte darauf geachtet werden, dass das Testbenzin oder ein anderes, unpolares Lösemittel, welches in der Metalleffektpigmentpaste vorliegt, in der Dispersion in Konzentrationen von bevorzugt unter 20 Gew.-, besonders bevorzugt unter 10 Gew.-%, bezogen auf das gesamte Lösemittel, vorliegt.

Die Schritte d) und optional e) der Verfahren sind bekannte Standardschritte und können in der üblichen Weise durchgeführt werden.

Insgesamt zeichnen sich die erfindungsgemäßen Verfahren durch ihre große Einfachheit und geringe Kosten aus.

Das verwendete Lösemittel kann in einem Kreislauf geführt werden, d.h. nach Schritt d) abgetrenntes Lösemittel kann, ggf. nach einer einfachen Aufarbeitung, wieder dem Beschichtungsprozeß zugeführt werden.

Die in dem erfindungsgemäßen Verfahren verwendeten Bindemittel sind spontan ausfällbar im Sinne dieser Erfindung. In bevorzugten Ausführungsformen weist das Bindemittel Polyesterfunktionen auf. Bei besonders bevorzugten Ausführungsformen ist das Bindemittel ein Polyester, welcher als Pulverlackbindemittel einsetzbar ist. Derartige Bindemittel werden über eine Schmelzpolymerisation hergestellt. Dabei werden die Monomeren (Carbonsäure-Funktionen haltige Monomere als Säurekomponente und Alkohol-Funktionen haltige Monomere als Alkoholkomponente) zur Schmelze gebracht und in Gegenwart geeigneter Katalysatoren durch Polykondensation polymerisiert bzw. oligomerisiert. Es entstehen Polyester, die als endständige funktionelle Gruppen Hydroxylgruppen oder Carbonsäuregruppen aufweisen können. Diese Polyester sind naturgemäß nicht völlig ausgehärtet, da sie als Bindemittel im Pulverlack ja nach dem Lackiervorgang beim Einbrennen des Lacks weiter aushärten müssen.

In weiteren bevorzugten Ausführungsformen enthält der Polyester als Säurekomponente einen Hauptteil aus Monomeren der Gruppe bestehend aus Isophthalsäure und Terephthalsäure und deren Mischungen. In besonders bevorzugten Ausführungsformen enthält das Bindemittel als Säurekomponente zumindest 14 mol-% Isophthalsäure, bezogen auf alle Säurekomponenten.

Bevorzugt beträgt der Anteil an Isophthalsäure und Terephthalsäure 50 bis 100 mol-% und besonders bevorzugt 70 bis 96 mol-%, bezogen auf alle Säurekomponenten.

Als weitere Säurekomponenten, die bevorzugt nicht als Hauptteil enthalten sind, können Adipinsäure, Phtalsäure, Succinsäure, Glutarsäure, Pimelinsäure, Azelainsäure, Sebacinsäure, Fumarsäure, Maleinsäure, 1,3-Cyclohexandicarbonsäure, 1,4-Cyclohexandicarbonsäure und Mischungen dieser Verbindungen vorhanden sein. Weiterhin können in kleinen Mengen (unter 10 mol-%) als verzweigende Bausteine tri- oder polyfunktionelle Carbonsäuren wie Trimellitsäure oder Pyromellitsäure vorhanden sein.

Hinsichtlich der Alkoholkomponenten des Polyesterbindemittels sind bevorzugt Ausführungsformen solche, die als Alkoholkomponente einen Hauptanteil von Neopentylglycol und/oder 2-Butyl-2-ethyl-1,3-propandiol aufweisen. Der Anteil von Neopentylglycol und/oder 2-Butyl-2-ethyl-1,3-propandiol beträgt bevorzugt 50 bis 100 mol-%, besonders bevorzugt 70 bis 98 mol-% und ganz besonders bevorzugt 80 bis 95 mol-%, bezogen auf alle Alkoholkomponenten. Ganz besonders bevorzugt ist hierbei Neopentylglycol als Hauptalkoholkomponente.

Polyesterbindemittel mit derartigen Alkoholgehalten werden in der Literatur eher den "amorphen" Polyestern zugerechnet (US 6,660,398 B1, US 6635721 B1).

Als weitere Alkoholkomponenten, die bevorzugt in insgesamt weniger als 50 mol-%aller Alkoholkomponenten vorhanden sind, können beispielsweise Ethylenglycol, 1,3-Propylenglycol, 1,4-Butandiol, 1,6-Hexandiol, 2-Methyl-1,3-propandiol, 1,4-Cyclohexanedimethanol, Hydrogeniertes Bisphenol A, Neopentylglycolhydroxypivalat und Mischungen dieser Verbindungen vorhanden sein. Weiterhin können in kleinen Mengen (unter 10 mol-%) als verzweigende Bausteine tri- oder polyfunktionelle Hydroxylierte Verbindungen, die mindestens drei Hydroxylgrupoen aufweisen, wie beispielsweise Trimethylolpropan, Di-trimethylolpropan, Pentaerythritol und Mischungen hiervon vorhanden sein.

In weiter bevorzugten Ausführungsformen liegt hinsichtlich der Alkoholkomponenten des Polyesters das Mol-Verhältnis von linearen $\alpha,\omega$-Alkoholen wie beispielsweise Ethylenglycol zu Neopentylglycol und/oder 2-Butyl-2-ethyl-1,3-propandiol unter 20 %, weiter bevorzugt unter 15 %; noch weiter bevorzugt unter 12 % und ganz besonders bevorzugt unter 10 % Polyester mit einem zu hohem Gehalt an linearen $\alpha,\omega$-Alkoholen wie beispielsweise Ethylenglycol haben sich als weniger geeignet für die spontane Fällung erwiesen.

In weiteren Ausführungsformen kann die Fällung der Pulverlackbindemittel, insbesondere der Polyesterpulverlackbindemittelvöllig überraschend in Gegenwart von Additiven, die als Fällungssteuerungsmittel fungieren, stattfinden. Diese Additive bewirken eine effektivere Fällung der Pulverlackbindemittel auf der Effektpigmentoberfläche. Dies macht sich in einer höheren Belegung der Pigmente mit Bindemittel und dementsprechend geringeren Nebenfällungen bemerkbar.

Diese Additive sind bevorzugt Kammcopolymere, die auf Maleinsäurenanhydriden mit Vinylaromaten, bevorzugt mit substituiertem oder unsubstituiertem Styrol, basieren. Weiterhin besitzen diese Additive bevorzugt Polyethereinheiten (EO und/oder PO), die mit Säuregruppen über Ester-, Amid- oder Imid-Gruppen verbunden sind.

Bevorzugt weisen diese Additive Säurezahlen von 4 bis 45 mg KOH/g, weiter bevorzugt von 5 bis 40 mg KOH/g auf.

Weiter bevorzugt handelt es sich um Salze, bei denen die Säurezahl in etwa gleich der Aminzahl ist.

Derartige Additive sind beispielsweise beschrieben in EP 2125909 B1, EP 2106412 B1, EP 2125910 B1, EP 2240543 B1, DE 102010049642 A1, EP 2723779 B1 oder EP 2864373 B1.

Kommerziell erhältliche Additive sind beispielsweise Byk 190, Disperbyk 2060, Disperbyk 2010, Byk ES80 oder Byk 187 (alle von Byk Additives & Instruments, Abelstrasse 26, D-46483 Wesel, Deutschland).

Derartige Additive finden üblicherweise überwiegend Einsatz als Netz- und Dispergieradditive, insbesondere im Hinblick auf die Bildung von Pigmentpasten. Eine Funktion als Hilfsmittel der in dieser Erfindung beschriebenen spontanen Polymerfällung auf Effektpigmente war nicht vorhersehbar.

In einer weiteren Ausführungsform der vorliegenden Erfindung wird das Effektpigment nach dem Schritt a2) und vor der Zugabe des Bindemittels und ggf vor der Zugabe eines Additivs mit einem Haftvermittler behandelt. Die Haftvermittler, insbesondere funktionelle Silane, sind weiter oben beschrieben.

Gegenstand der Erfindung ist ferner die Verwendung der erfindungsgemäßen Effektpigmente.

Die erfindungsgemäß beschichteten Effektpigmente finden Verwendung in Lacken, Pulverlacken, Druckfarben, Toner oder Kunststoffen. Besonders bevorzugt ist die Verwendung in Pulverlacken.

Da die erfindungsgemäß verwendeten Bindemittel solche sind, die als Pulverlackbindemittel geeignet sind, lassen sich die erfindungsgemäßen Effektpigmente besonders gut im Pulverlack verarbeiten. Hierbei kann da Bindemittel des Pulverlacks, in dem das Effektpigment eingearbeitet wird, gleich oder verscheiden von jenem Bindemittel, aus dem die Beschichtung besteht, sein.

Bei bevorzugten Ausführungsformen wird man sowohl als Beschichtungsbindemittel für die Effektpigmente als auch als Bindemittel für den Pulverlack Polyesterharze wählen.

**Liste der Abbildungen:**

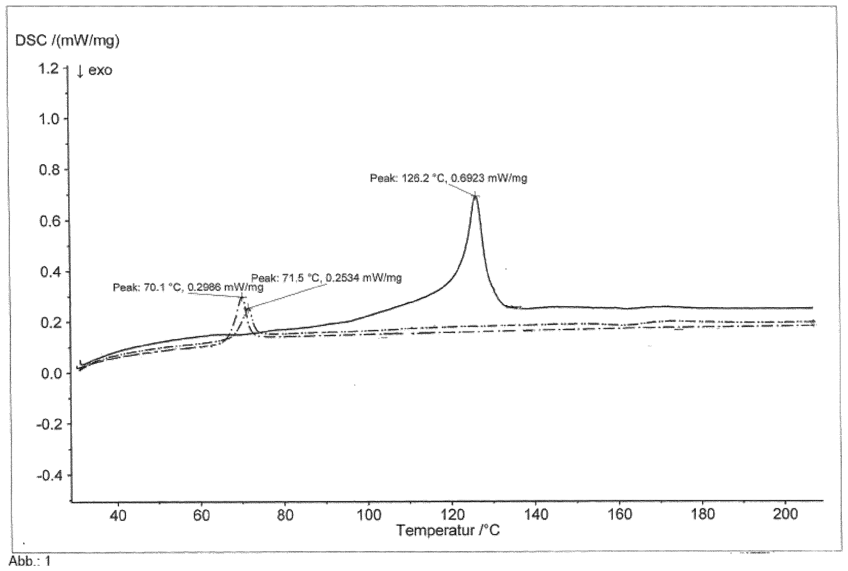

Abb. 1: DSC-Diagramme aufgenommen bei 5 °K/min in einem Temperaturintervall von 30 bis 210 °C in einer Darstellung über die Temperatur. Es sind lediglich die Hinläufe zu höheren Temperaturen gezeigt und keine Rückläufe.

- (Durchgezogene Linie): Vorversuchsbeispiel 1: Pulverlack CC 4540-0 nach dem Ausfällen aus Aceton,

--·--· (Linie Strich, Punkt): Vorversuchsvergleichsbeispiel 1: Pulverlack CC 4540-0 wie vom Hersteller erhalten

_ .. _ . ._ . (Linie Strich, Punkt, Punkt): Vorversuchsbeispiel 1b: Pulverlack CC 4540-0 nach dem Ausfällen, 2. Scan direkt nach 1. Scan

Abb. 2: Schematische Darstellung der verwendeten Pulsfolgen für die $^{13}$C-MAS NMR Übersichtsmessungen (Abb. 2a) und die $^{13}$C-NMR MAS Relaxationsmessungen (Abb. 2b).

Abb. 3: PXRD von Vorversuchsbeispiel 1 (CC 4540-0) für die amorphe Phase gemäß Vorversuchsvergleichsbeispiel 1 (oben) und teilkristalline Phase gemäß Vorversuchsbeispiel 1 (Mitte, gestrichelte Linie) sowie die beschichteten Aluminiumpartikel gemäß Beispiel 1 (unten, gepunktete Linie).

Die Messung erfolgte an einem STOE StadiP Diffraktometer in Debye-Scherrer-Geometrie mit $Cu_{K\alpha1}$-Strahlung (Ge(111)-Monochromator). Es wurden SiOz-Kapillaren mit einem Durchmesser von 0,3 mm verwendet. Die Messdaten für die amorphe und die teilkristallinen Proben wurden zur besseren Übersicht um 50000 und 25000 counts nach oben verschoben. Die sehr scharfen und hohen Peaks von Beispiel 1 sind auf Reflexe des Aluminiumsubstrats zurückzuführen.

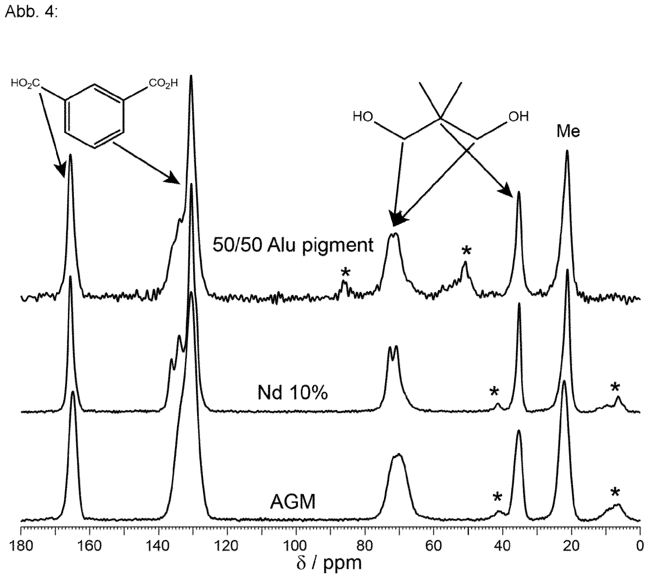

Abb. 4: $^{13}$C CP-MAS-Spektren des Bindemittels CC 4540-0 für die amorphe Phase gemäß Vorversuchsvergleichsbeispiel 1 (unten, mit "AGM" bezeichnet; $\nu_{rot}$ = 12,5 kHz), die teilkristalline Phase gemäß Vorversuchsbeispiel 1 (Mitte, mit "ND 10%" bezeichnet; $\nu_{rot}$ = 12,5 kHz) sowie die beschichteten Aluminiumpartikel gemäß Beispiel 1 (oben, mit "50/50 Alu pigment" bezeichnet; $\nu_{rot}$ = 8 kHz). Rotationsseitenbanden sind mit Sternen markiert und die isotropen chemischen Verschiebungen wurden den charakteristischen chemischen Baueinheiten der Säure- und Alkoholkomponenten des Polyesters zugeordnet.

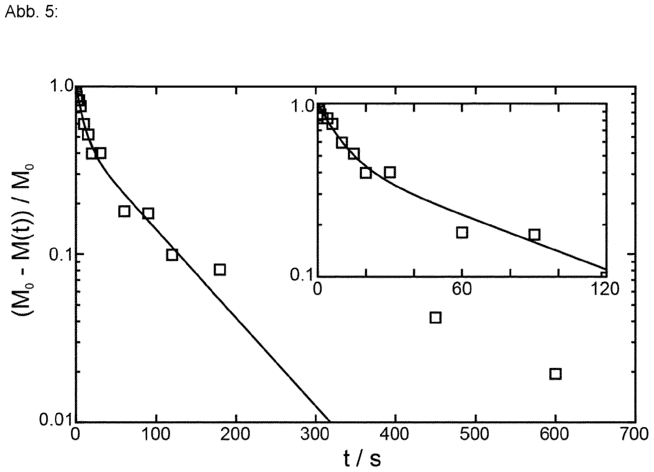

Abb. 5: Auftrag der Relaxationsstärke gegen die Wartezeit für die $^{13}$C-Resonanz der Methylengruppe des teilkristallinen Polymers aus dem Vorversuchsbeispiel 1 (Bindemittel CC 4540-0). Die zwei verschiedenen Zeitkonstanten für den amorphen und den kristallinen Anteil spiegeln sich in zwei Bereichen mit signifikant verschiedenen Steigungen wider.

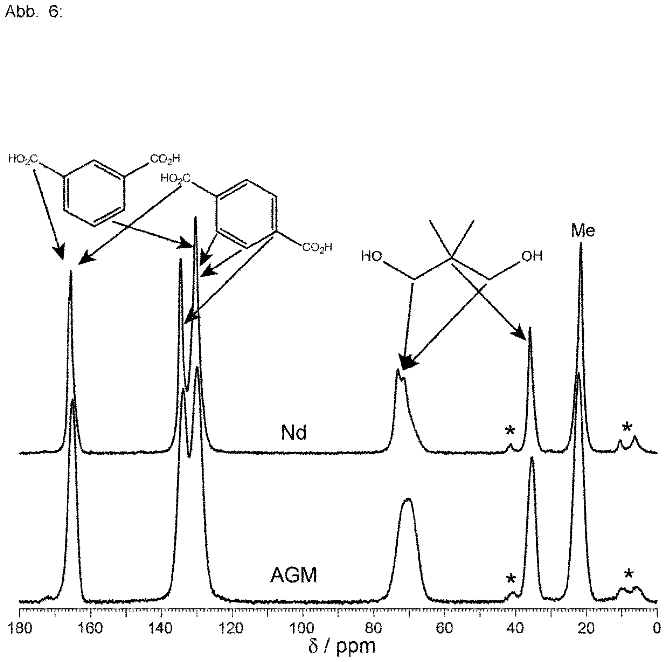

Abb. 6: $^{13}$C CP-MAS-Spektren des Bindemittels CC 2506 für die amorphe Phase gemäß Vorversuchsvergleichsbeispiel 10 (unten, mit "AGM" bezeichnet; $\nu_{rot}$ = 6 kHz) und die teilkristalline Phase gemäß Vorversuchsbeispiel 1 (Mitte, mit "ND" bezeichnet; $\nu_{rot}$ = 6 kHz). Rotationsseitenbanden sind mit Sternen markiert und die isotropen Chemischen Verschiebungen wurden den charakteristischen chemischen Baueinheiten zugeordnet.

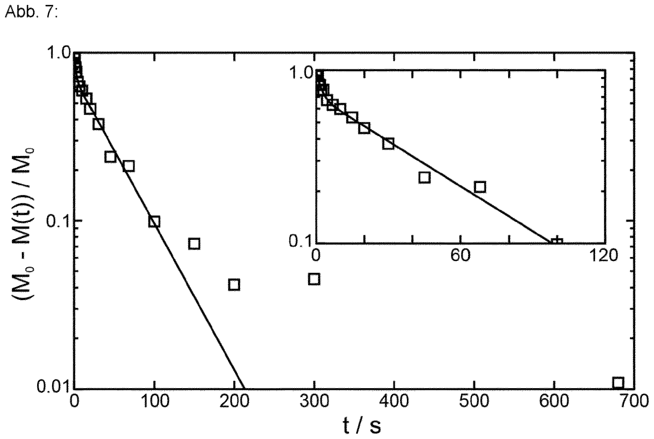

Abb. 7: Auftrag der Relaxationsstärke gegen die Wartezeit für die $^{13}$C-Resonanz der Methylengruppe des teilkristallinen Polymers aus dem Vorversuchsbeispiel 10 (Bindemittel CC 2506-1). Die zwei verschiedenen Zeitkonstanten für den amorphen und den kristallinen Anteil spiegeln sich in zwei Bereichen mit signifikant verschiedenen Steigungen wider.

**Beispiele**

**A1 Vorversuche 1 bis 15:**

In den Vorversuchen wurden verschiedenste Polyesterbindemittel, die als Pulverlackbindemittel kommerziell angeboten werden, in Lösemitteln wie Aceton, Methylethylketon (MEK) oder Ethylacetat bei Raumtemperatur gelöst und anschließend untersucht hinsichtlich einer möglichen spontanen Ausfällung. Hierzu wurde in einem Becherglas das Lösemittel vorgelegt, ggf die Temperatur eingestellt und das Bindemittelpulver (typischerweise ca. 1/6 der Menge des Lösemittels) unter Rühren zugegeben.

Alle Bindemittel die die spontane Fällung zeigten wurden zunächst rückstandsfrei gelöst, lagen dabei jedoch als leicht gräuliche Lösung vor, was auf einen zumindest teilweise kolloidalen Zustand schließen läßt. Bindemittel die keine spontane Fällung zeigten (Vergleichsbeispiele) lösten sich stets in farbloser klarer Lösung.

Die spontane Fällung erfolgte in unterschiedlichen Zeiten: diese konnten einige Minuten bis hin zu ca. 48 Stunden betragen. Die gefällten Polymere wurden über ein VWR-Filterpapier 454 (Partikelrückhaltung: 12 -15 $\mu$m) abfiltriert und bei 50°C für 6 h im Vakuumtrockenschrank getrocknet. Diese Polymerpulver konnten nunmehr weiter analysiert werden.

Systematische Untersuchungen an einigen ausgewählten Polymeren zeigten, dass die Fällung zumindest zu 90%, in den meisten Fällen weitgehend quantitativ erfolgte.

Alle Ergebnisse hierzu sind in Tabelle 1 zusammengefasst.

**Vorversuchsvergleichsbeispiele 1 bis 3:**

Die Bindemittel CC 340, CC 2818-0 (beide Allnex) sowie Uralac P 1580 (DSM) wurden in Aceton, Ethylacetat oder Methylethylketon gelöst, fielen jedoch nicht mehr aus.

Diese Bindemittel sind daher nicht spontan fällbar im Sinne dieser Erfindung.

**Vorversuchsvergleichsbeispiel 4 bis 6:**

Es wurde in Vorversuchen versucht die teilkristallinen Pulverlack Polyesterharze UVCOAT 9010, Additol P791 sowie Crylcoat-8078-0 (alle Fa. Allnex), bei Raumtemperatur sowie bei verschiedenen Temperaturen bis zu 5 °C unterhalb der jeweiligen Siedetemperatur in Ethylacetat, Aceton und Methylethylketon zu lösen. Die Harze ließen sich jedoch nicht in einem der Erfindung entsprechendem ausreichenden Maß lösen.

Diese Bindemittel sind daher nicht spontan fällbar im Sinne dieser Erfindung.

Diese Harze wurden, sowie analytisch durchführbar, hinsichtlich ihrer Monomerenzusammensetzung untersucht (s. Tabelle 1) und mittels DSC charakterisiert (s. Tabelle 2).

**A2 Aufbau Bindemittel**

Die Bindemittel wurden mittels üblicher Methode der Polymeranalytik wie beispielsweise GC-Massenspektroskopie, IR-Spektren und NMR ($^1$H-, $^{13}$C sowie 2-D-NMR) hinsichtlich ihrer Monomerenzusammensetzung analysiert. Hierbei wurden einige der Säuremonomerkomponenten, die in sehr geringer Menge vorlagen, pauschal unter "sonstige Säuren" subsummiert.

Tabelle 1 gibt einen Überblick über die untersuchten Bindemittel. Hierbei ist auch grob die Fällungszeit angegeben sowie die Resultate der Monomerenbestandteilanalyse. Hierbei wurden bei jeder Probe die Mengen von Isophthaloder der Terephthalsäure (Vorversuchsvergleichsbeispiel 3) jeweils als 100 Teile gesetzt und alle anderen Komponenten im Verhältnis hierzu angegeben.

In weiteren Vorversuchsbeispielen wurde gemäß Beispiel 1 verfahren, wobei verschiedenste Polyesterharze, die geeignet für Pulverlacke sind, verwendet wurden.

Die Ergebnisse der Lösungsversuche in Aceton bei Raumtemperatur sowie die analytisch bestimmten Monomerenzusammensetzungen sind in Tabelle 1 gezeigt. Ähnliche Ergebnisse erhielt man auch in Lösemitteln wie Ethylacetat oder Methylethylketon (MEK).

In sehr unpolaren Lösemittel wie Chloroform lösten sich die Bindemittel vollständig auf, so dass eine klare Lösung erhalten wurde. Es kam jedoch zu keiner Fällung.

Insgesamt zeigten von einundzwanzig untersuchten Polyesterbindemitteln fünfzehn das Verhalten der spontanen Fällung (Vorversuchsbeispiele 1 -15), während drei Bindemittel sich zwar im Lösungsmittel lösten, jedoch nicht mehr spontan ausfielen (Vorversuchsvergleichsbeispiele 1-3) und drei weitere Bindemittel nicht löslich waren (Vorversuchsvergleichsbeispiele 4-6).

Die meisten dieser Bindemittel wurden auch in Ethylacetat sowie Methylethylketon getestet, was zu ähnlichen Resultaten führte.

Tabelle 1: Lösungsverhalten in Aceton und analytische Monomerenzusammensetzung der Polyesterbindemittel gemäß Vorversuche

| Beispiel | Bindemittel | Hersteller | Fällungs-zeit | Analytisch bestimmte relative Menge an Monomeren (bezogen auf 100 Teile Isophthalsäure oder Terephthalsäure) | | | | | |
|---|---|---|---|---|---|---|---|---|---|
| | | | | Isophthalsäure | Terephthalsäure | Andere Säuren | Neopentyl-glykol | Trimethylolpropan (TMP) | Ethylenglycol/ Diethyleng-lykol |
| Vorversuchs-beispiel 1 | CC* 4540-0 | Allnex | < 3 h | 100 | 1,8 | - | 92,1 | 2,5 | 4,8 |
| Vorversuchsbeispiel 2 | Uralac P 3480 | DSM | < 3 h | 100 | 3 | 0,2 | 94 | 2 | |
| Vorversuchsbeispiel I 3 | Uralac P 3495 | DSM | < 20 h | 100 | 362 | 9 | 442 | | |
| Vorversuchsbeispiel 4 | CC 2578-0 | Allnex | < 42 h | 100 | 450 | 4 | 505 | 8 | |
| Vorversuchsbeispiel I 5 | CC 4420-0 | Allnex | < 20 h | 100 | | | 82 | 7 | |
| Vorversuchsbeispiel 6 | Uralac P800 | DSM | < 1 min | 100 | 5,2 | | 98,3 | 0,9 | 2,3 |
| Vorversuchsbeispiel 7 | CC 4626-0 | Allnex | < 1 min | 100 | 1,3 | | 92,5 | | |
| Vorversuchsbeispiel I 8 | Uralac P6800 | DSM | < 3 h | 100 | 1,5 | | 84,5 | 5 | 7,6 |
| Vorversuchsbeispiel 9 | CC 4655-2 | Allnex | < 3 h | 100 | < 1 | | 87,7 | 3,6 | 5,9 |
| Vorversuchsbeispiel 10 | CC 2506-1 | Allnex | < 3 h | 100 | 435,8 | | 508,2 | | |
| Vorversuchsbeispiel 11 | CC 2505-4 | Allnex | < 3 h | 100 | 545 | 17 | 587 | 47,2 | |
| Vorversuchsbeispiel 12 | P 3486 | Allnex | < 42 h | 100 | 592,3 | | 653,2 | 6 | 11,1 |
| Vorversuchsbeispiel 13 | CC 4890-0 | Allnex | < 3 h | 100 | 1,6 | | 112 | 3 | 7,5 |

(fortgesetzt)

| Beispiel | Bindemittel | Hersteller | Fällungs-zeit | Analytisch bestimmte relative Menge an Monomeren (bezogen auf 100 Teile Isophthalsäure oder Terephthalsäure) | | | | | |
|---|---|---|---|---|---|---|---|---|---|
| | | | | Isophthalsäure | Terephthalsäure | Andere Säuren | Neopentyl-glykol | Trimethylolpropan (TMP) | Ethylenglycol/ Diethylenglykol |
| Vorversuchs-beispiel 14 | Sirales 7499 | SIR | < 3 h | 100 | 2,6 | | 98,2 | | |
| Vorversuchsbeispiel 15 | Uralac P 5500 | DSM | < 3 h | 100 | | 12,4 | 90,7 | 1,8 | |
| Vorversuchs-vergleichs-beispiel 1 | CC 340** | Allnex | Keine Fällung | | 100 | | 82,1 | | 27,5 |
| Vorversuchs-vergleichs-beispiel 2 | Uralac P 1580 | DSM | Keine Fällung | 100 | | | 67 | 18 | 15 |
| Vorversuchs-vergleichs-beispiel 3 | CC 2818 | Allnex | Keine Fällung | 0 | 100 | | 0 | 14,7 | 89,6 |
| Vorversuchs-beispiel 4 | UVCOAT 9010 | Allnex | Keine Lösung | | | 100,5*** | | | 100 bis 105 (Ethylenglycol) |
| Vorversuchs-beispiel 5 | Additol***** P791 | DSM | Keine Lösung | | | **** | | | |
| Vorversuchs-beispiel 6 | CC-8079-0 | Allnex | Keine Lösung | | | 100***** | | 2,4 | trans-1,4-Dimethylolcyclohexan: 61,0; cis-1,4-Dimethylolcyclohexan: 34,1 |

* Das Kürzel CC steht für "Crylcoat" ** Bindemittel der Beispiele aus der EP 1 699 884 B1 *** Dodecansäure **** Dieses Produkt ließ sich nur in geringsten Mengen in DMSO lösen und daher konnte keine Analyse durchgeführt werden. Es handelt sich um einen Ester der 1,12-Dodecansäure

***** Adipinsäure

EP 3 798 278 B1

Die Bindemittel der Vorversuchsvergleichsbeispiele 1-3 wiesen einen im Vergleich zu Neopentylglycol hohen Anteil an Ethylenglycol bzw. an Trimethylolpropan auf.

Weitere drei Bindemittel, die von ihren Herstellern als "teilkristalline" Pulverlackbindemittel vertrieben werden, konnten nicht hinreichend gelöst werden (Vorversuchsvergleichsbeispiele 4-6). Diese Bindemittel wiesen als Säurekomponente einen Hauptanteil an Adipinsäure (Vorversuchsbeispiel 5) oder an 1,12-Dodecansäure auf. Als Alkoholkomponenten fanden sich, soweit analysierbar, keine nachweisbaren Mengen an Neopentylglycol, sondern stattdessen Ethylenglycol (Vorversuchsbeispiel 4) oder ein Gemisch aus cis- und trans-Dimethylolcyclohexan.

Offenbar weisen diese Bindemittel schon einen derart kristallinen Anteil auf, dass sie nicht gelöst werden können und demgemäß auch keine "spontane Polymerisation" mehr aufweisen.

**DSC-Untersuchungen an Bindemitteln der Vorversuche:**

Für erfindungsgemäße Beispiele der Vorversuche wurden weiterhin DSC Untersuchungen durchgeführt. Hierbei wurden geringe definierte Mengen (einige mg) sowohl des gefällten und getrockneten Bindemittels (Vorversuchsbeispiele) als auch zum Vergleich des ungefällten, trockenen Bindemittels, wie es von Hersteller erhalten wurde (Vorversuchsvergleichsbeispiele), eingewogen und DSC-Messungen (Gerät Hersteller: Fa. Netzsch, Deutschland; Typ: STA 449 F3 Jupiter; Vergleichsstandard: Indium ) durchgeführt. Hierbei betrug die Vorlaufgeschwindigkeit 5 °K/min und der Temperaturbereich erstreckte sich in der Regel von 30 °C bis 250 °C. Die Probe wurde anschließend ohne Wartezeit abgekühlt mit 5 K/min bis auf 40 °C und nach 20 Minuten Wartezeit bei dieser Temperatur wurde ein zweiter Temperaturdurchlauf mit 5 K/min bis 250 °C aufgenommen. Die Messungen fanden unter Luft statt, da keine Reaktivität mit Sauerstoff festgestellt werden konnte.

Hierbei zeigten sich bei den ungefällten Vergleichsproben jeweils ein endothermer Peak mit einem Maximum in einem Bereich von über 60 bis ca. 75 °C und einem korrespondierenden $T_{Onset}$ von ca. 55 bis unter 70 °C. Unterhalb dieses Peaks liegt in aller Regel eine Glastemperatur $T_g$, was sich im DSC bekanntlich in einer Verschiebung der Basislinie bemerkbar macht. Diese Glastemperatur ist in erster Linie den amorphen Anteilen des Polymers zuzuordnen. Dieses Verhalten im DSC ist für diese Polyesterbindemittel bekannt und ganz üblich. Der Peak dürfte auf das Aufschmelzen gewisser geringer kristalliner Anteile zurückzuführen sein.

Bei den spontan gefällten Proben hingegen wurden wesentlich größere endotherme Peaks gefunden, die ein Maximum $T_{max}$ in einem Bereich von ca. 120 bis ca. 135 °C und einem korrespondierenden $T_{Onset}$ von ca. 100 bis 124 °C aufwiesen. Auch hier kann noch eine Glastemperatur unter dem Peak liegen. Der Temperaturrücklauf aller Proben verlief immer im Wesentlichen unstrukturiert ohne deutlich identifizierbare Peaks.

Dies ist ein klarer Hinweis darauf, dass die stark verschobenen und vergrößerten endothermen Peaks auf eine wesentliche Zunahme der kristallinen Anteile der untersuchten Polyesterharze durch die spontane Fällung zurückführen ist.

Wurde bei den spontan gefällten Proben eine zweite Messung nach dem ersten Temperaturzyklus durchgeführt, so wurde stets ein Verhalten ähnlich der ungefällten Proben beobachtet.

Abb. 1 zeigt beispielhaft die Temperaturhinläufe für Vorversuchsbeispiel 1. Das ungefällte Polymer, wie es vom Hersteller erhalten wird (Vorversuchsvergleichsbeispiel 1), weist einen endothermen Peak mit einem Maximum bei 70,1 °C auf. Das gefällte Polymer hingegen weist einen endothermen Peak bei 126,2 °C und einer viel höheren Enthalpie auf (Vorversuchsbeispiel 1). Nimmt man erneut ein DSC-Spektrum nach dem Rücklauf auf 30 °C von diesem Polymer auf, so ist der nächste DSC-Scan sehr vergleichbar demjenigen des ungefällten Polymers (Vorversuchsvergleichsbeispiel 1b, $T_{max}$ bei 71,5 °C). Offenbar wurde die kristalline Struktur, die aufgrund der spontanen Fällung erhalten wurde, bei höheren Temperaturen irreversibel zerstört.

Würde man allerdings dieses Polymer wieder im Lösemittel lösen und spontan ausfällen, so würde wieder eine DSC-Kurve ähnlich der von Vorversuchsbeispiel 1 erhalten (nicht im Abb. 1 gezeigt). Der Kristallisationsvorgang ist in diesem Sinne reversibel.

Bei allen DSC-Versuchen wurden stets gleichzeitig TGA- Messungen durchgeführt. Hier zeigten sich bei einigen Proben Abnahmen der Masse im Bereich von 1 bis ca. 2 Gew.-%. Dabei konnte in der Regel eine erste Stufe bei einer Temperatur von ca. 50°C beobachtet werden. Die kann so interpretiert werden, dass hier Restspuren des Lösemittels aus dem gefällten Polymer entfernt wurden.

Die Peaks wurden integriert, um die damit verbundene Enthalpie $\Delta H$ zu berechnen. Tabelle 2 zeigt im Überblick die erhaltenen Meßdaten. Hier sind die Onset-Temperaturen $T_{Onset}$, die Maximumstemperaturen $T_{Max}$ sowie die mit den Peaks verbundenen Enthalpien $\Delta H$ (nach Abzug einer üblichen Untergrundkorrektur) der endothermen Peaks für die ungefällten Bindemittelproben (Vorversuchsvergleichsbeispiele) sowie für die gefällten Proben (Vorversuchsbeispiele) dargestellt. Weiterhin sind die Verschiebungen dieser Parameter dargestellt, wobei jeweils der Wert des ungefällten Bindemittels von demjenigen des gefällten Bindemittels subtrahiert wurde. Bei den Enthalpien wurde das Verhältnis des gefällten zum ungefällten Polyesterharz gebildet.

Diese enorme Temperaturverschiebung der $T_{max}$-Werte sowie der starke Anstieg der damit verbundenen Enthalpie der endothermen Peaks läßt sich auf eine wesentliche Zunahme der kristallinen Anteile der Polymere durch die spontane Fällung zurückführen.

Tabelle 2: $T_{onset}$, $T_{max}$ und $\Delta H$-Parameter aus DSC-Messungen an gefällten Bindemitteln (Vorversuchsbeispiele) und ungefällten Bindemitteln (Vorversuchsvergleichsbeispiele)

| Beispiel | Bindemittel | Ungefälltes Bindemittel (Vorversuchs-vergleichsbeispiele) | | | Gefälltes Bindemittel (erfindungsgemäße Vorversuchsbeispiele) | | | Vergleich (gefälltes minus ungefälltes Bindemittel) | | |
|---|---|---|---|---|---|---|---|---|---|---|
| | | $T_{onset}$ [°C] | $T_{max}$ [°C] | $\Delta H_{AGM}$ [J/g] | $T_{onset}$ [°C] | $T_{max}$ [°C] | $\Delta H$ / [J/g] | $\Delta T_{onset}$ [°C] | $\Delta T_{max}$ [°C] | $\Delta H_{gefällt}$/ $\Delta H_{AGM}$ |
| Vorversuchs-beispiel 1 | CC 4540-0 | 65,6 | 70,1 | 9,4 | 100,5 | 126,2 | 55,0 | 34,9 | 56,1 | 5,9 |
| Vorversuchs-beispiel 2 | P 3480 | 66,9 | 71,2 | 8,0 | 104,5 | 128,8 | 44,0 | 37,6 | 57,6 | 5,5 |
| Vorversuchs-beispiel 3 | P 3495 | 64,6 | 71,1 | 5,1 | 105,4 | 129 | 30,9 | 40,8 | 57,9 | 6,0 |
| Vorversuchs-beispiel 4 | CC 2578-0 | 70,1 | 73,5 | 6,9 | 107,1 | 130,5 | 32,2 | 37,0 | 57 | 4,7 |
| Vorversuchs-beispiel 5 | CC 4420-0 | 64 | 71,3 | 7,4 | 105,7 | 123,4 | 38,2 | 41,7 | 51,7 | 5,2 |
| Vorversuchs-beispiel 6 | P800 | 65,4 | 69,3 | 7,9 | 124 | 132,5 | 38,2 | 58,6 | 67,2 | 6,1 |
| Vorversuchs-beispiel 7 | CC 4626-0 | 63,8 | 67,7 | 10,1 | 127 | 134,1 | 51,4 | 63,2 | 66,4 | 5,1 |
| Vorversuchs-beispiel 8 | P 6800 | 63,8 | 66,6 | 8,5 | 115,8 | 124,5 | 42,2 | 52,0 | 57,9 | 5,0 |
| Vorversuchs-beispiel 9 | CC 4655-2 | 67,8 | 72 | 8,5 | 117 | 125,3 | 41,9 | 49,2 | 53,3 | 4,9 |
| Vorversuchs-beispiel 10 | CC 2506-1 | 68,3 | 71,7 | 6,2 | 106,2 | 132,2 | 35,0 | 37,9 | 60,6 | 5,6 |
| Vorversuchs-beispiel 11 | CC 2505-4 | 64,8 | 68,9 | 6,0 | 110,1 | 130,7 | 32,8 | 45,3 | 61,8 | 5,5 |
| Vorversuchs-beispiel 12 | P 3486 | 64,6 | 67,1 | 5,2 | 110,2 | 134,5 | 35,6 | 45,6 | 67,4 | 6,8 |
| Vorversuchs-beispiel 13 | CC 4890-0 | 66,8 | 69,8 | 8,7 | 105,4 | 125,9 | 43,0 | 38,6 | 56,1 | 4,9 |

(fortgesetzt)

| Beispiel | Bindemittel | Ungefälltes Bindemittel (Vorversuchs-vergleichsbeispiele) | | | Gefälltes Bindemittel (erfindungsgemäße Vorversuchsbeispiele) | | | Vergleich (gefälltes minus ungefälltes Bindemittel) | | |
|---|---|---|---|---|---|---|---|---|---|---|
| | | $T_{onset}$ [°C] | $T_{max}$ [°C] | $\Delta H_{AGM}$ [J/g] | $T_{onset}$ [°C] | $T_{max}$ [°C] | $\Delta H$ / [J/g] | $\Delta T_{onset}$ [°C] | $\Delta T_{max}$ [°C] | $\Delta H_{gefällt}$/ $\Delta H_{AGM}$ |
| Vorversuch-beispiel 14 | Sir 7499 | 66,8 | 69,9 | 8,3 | 106,8 | 126,7 | 45,3 | 40,0 | 56,8 | 5,5 |
| Vorversuch-beispiel 15 | P 5500 | 59,6 | 62,7 | 9,0 | 103,4 | 120 | 38, | 43,8 | 53,3 | 4,2 |
| Vorversuch beispiel 4 | UVCOAT 9010 | 79,5 | 84,1 | 105,1 | -- | -- | -- | -- | -- | -- |
| Vorversuch beispiel 5 | Additol P791 | 86,5 | 94,3 | 191,1 | -- | -- | -- | -- | -- | -- |
| Vorversuch beispiel 6 | Crylcoat-8079-0 | 86,4 | 92,5 / 99,7 | 34,6 | -- | -- | -- | -- | -- | -- |

22

Die sehr hohen Werte für den Schmelzbereich von 120 bis über 132 °C sind in der Literatur in ähnlicher Weise nur bekannt von den sogenannten "semikristallinen" Polyester (EP 0 521 992 B1, US 4,217,426). Dort werden auch ähnliche Enthalpiewerte berichtet.

Erstaunlich ist hier jedoch, dass die Bindemittel aufgrund ihrer Monomerenzusammensetzung eher als "amorphe" Bindemittel bekannt sind (z.B. US 6,660,398 B1). Der Kristallisationsgrad, der durch die spontane Fällung erreicht wird, ist anscheinend sehr hoch.

Die Enthalpiewerte der Vorversuchsvergleichsbeispiele 4 und 5 (gemessen nur im ersten Scan) waren mit 105,1 und 191,1 J/g noch höher als alle gemessenen Enthalpiewerte der erfindungsgemäßen Beispiele nach der Fällung. Dies scheint einen noch höheren Kristallisationsgrad wider zu spiegeln. Diese Bindemittel sind offenbar so stark kristallin, dass sie sich nicht in den hier verwendeten Lösemitteln lösen lassen und somit keine spontane Kristallisation eingehen.

**B Beschichtung Effektpigmente:**

**Beispiel 1:**

Verwendet wurde ein offener 1-Liter-Doppelmantelreaktor, der mittels eines Kryostaten auf 15 °C gekühlt wurde. Es wurden 60,0 g $SiO_2$ beschichtetes Aluminiumeffektpigment (STANDART® PCS 3500, erhältlich bei Fa. Eckart GmbH) mit einer mittleren Teilchengröße $D_{50}$ von 35 $\mu$m vorgelegt und in 250 g Aceton suspendiert. Über eine Schüttelrinne wurden über eine Zeit von 60 min 63,0 g eines carboxylgruppenhaltigen, gesättigten Polyesterharzes mit der Bezeichnung Crylcoat 4540-0 (Hersteller: Allnex S.à.r.l.) zur Suspension gegeben. Nach Ende der Zugabe wurde die Suspension für 2 Stunden gerührt und anschließend abgenutscht. Der erhaltene Niederschlag wurde in einem beheizbaren Duplex-Kneter (Typ HKD-T06D, Fa. IKA®-Werke GmbH & Co. KG) unter Vakuum bei 35 °C und 80 mbar für eine Stunde getrocknet und anschließend über ein Sieb mit einer Maschenweite von unter 100 $\mu$m gesiebt.

**Beispiel 2:**

Es wurde wie in Beispiel 1 verfahren, jedoch wurde als Polyesterharz jenes mit der Bezeichnung Sirales PE 7499 (Hersteller: SIR Industriale SpA) (entsprechend Vorversuch 14) verwendet.

**Beispiel 3:**

Es wurde wie in Beispiel 1 verfahren, jedoch wurde als Polyesterharz jenes mit der Bezeichnung CC 2506-1 (Hersteller: Allnex S.à.r.l.) (entsprechend Vorversuch 10) verwendet.

**Beispiel 4:**

Es wurde wie in Beispiel 1 verfahren, jedoch wurde als Effektpigment 60,0 g $SiO_2$ beschichtetes Goldbronze-pigment Dorolan Reichbleichgold 17/0 verwendet.

**Beispiel 5:**

Es wurde wie in Beispiel 1 verfahren, jedoch wurde als Effektpigment 60,0 g Perlglanzpigment Luxan E221 (Fa. Eckart GmbH, Deutschland) verwendet.

**Beispiel 6:**

Es wurde wie in Beispiel 1 verfahren, jedoch wurde als Lösemittel Ethylacetat statt Aceton verwendet und vor der Zugabe des Bindemittels wurden 1,0 g Disperbyk 2060 zur Metalleffektpigmentsuspension gegeben und 1 h gerührt, bevor das Bindemittel zugegeben wurde. Nach Ende der Zugabe wurde die Suspension für 2 Stunden gerührt und danach wurde die Suspension für 1 h ruhen gelassen. Es bildete sich ein nur leicht trüber Lösemittelüberstand, während das beschichtete Metalleffektpigment sedimentierte.

Wurde bei der Rezeptur nach Beispiel 1 ohne Additivzugabe entsprechend vorgegangen, so war der Überstand deutlich trüber. In Lichtmikroskopischen Aufnahmen sowie bei REM-Aufnahmen konnte man erkennen, dass das Metalleffektpigment bei Beispiel 6 besser und gleichmäßiger mit Polymer beschichtet war als bei Beispiel 1, bei dem einige Nebenfällungen beobachtet wurden.

**Beispiel 7:**

Es wurde wie in Beispiel 6 verfahren, jedoch wurde noch vor der Zugabe von Disperbyk 2060 zur Suspension des Metalleffektpigments dieser 2,0 g Dynasylan Glymo (Fa. Evonik Industries AG) zugegeben und 1 h bei Raumtemperatur gerührt.

Die Quantität der Polymerfällung war vergleichbar mit Beispiel 6.

**Vergleichsbeispiel 1** (in Anlehnung an die EP 1 699 884 B1):

Es wurden 195 g des Polyesterharzes Crylcoat 2818-0 (Fa. Allnex S.à.r.l.) sowie als Härterkomponente 105 g eines Polyisocyanat-Adduktes mit der Bezeichnung Vestagon BF 1320 (Hersteller: Fa. Evonik) in 1.800 g Aceton gelöst und 200 g $SiO_2$ beschichtetes Aluminiumeffektpigment (STANDART® PCS 3500, erhältlich bei Fa. Eckart GmbH) dispergiert. Die Dispersion wurde in einem Sprühtrockner bei einer Rate von 30 g/min und einem Spritzdruck von 2,5 bar in einem 55 °C warmen Luftstrom versprüht. Nach Trocknung wurde eine Ausbeute von 380 g beschichtetes Effektpigment erhalten.

**Vergleichsbeispiel 2:**

Beschichtung wie im Vergleichsbeispiel 1, nur wurde als Substrat 200 g Perlglanzpigment Luxan E221(Fa. Eckart GmbH, Deutschland) verwendet.

**Vergleichsbeispiel 3: Verwendung eines UCST-Polymers in Anlehnung an DE 102 43 438 A1**

Das Metalleffektpigment wurde gemäß Beispiel 1 suspendiert, wobei jedoch 250 g entionisiertes Wasser als Lösemittel verwendet wurden. Als Polymer wurden 63 g LUVITEC® VPC 55 K 65 W (UCST-Polymer der Fa. BASF mit Trübungspunkttemperatur bei ca 65 °C in Wasser) zugegeben. Anschließend wurde die Temperatur auf 75 °C innerhalb einer Stunde erhöht und das Gemisch eine Stunde bei dieser Temperatur belassen. Anschließend wurde die noch warme Dispersion filtriert.

Der erhaltene Niederschlag wies im Gegensatz zu den erfindungsgemäßen Beispielen eine hohe Zähigkeit auf, was auf starker Agglomeration der Pigmentteilchen zurückzuführen war. Die Agglomeration erwies sich als so stark das eine weitere Prüfung der Pigmente nicht sinnvoll erschien.

In weiteren Vergleichsversuchen wurde sowohl die Fällungstemperatur variiert als auch Ethylacetat statt Wasser als Lösemittel verwendet, wobei sich jedoch immer Agglomerate einstellten.

**B1 Anwendungstechnische Eigenschaften**

**B 1.1 Lagerstabilitätstests:**

In Anlehnung an DIN EN ISO 8130-8 wurden 50 g Pigmentpulver der erfindungsgemäßen Beispiele bzw. den Vergleichsbeispielen jeweils in eine verschließbare Aluminiumdose gegeben und für 28 Tage in einem Wärmeschrank bei 60 °C gelagert. Nach Ablauf der Zeit wurde die Konsistenz nach den unten stehenden Kriterien gegenüber einer bei Raumtemperatur gelagerten Vergleichsprobe beurteilt und benotet.

**Tabelle 3:** Den Lagertests liegt folgendes Bewertungssystem zugrunde:

| Kennzahl | Ausmaß von Verfestigung oder Agglomeratbildung |
|---|---|
| 0 | Keine Veränderung |
| 1 | Geringe Anzeichen von Verfestigung; Agglomerate können leicht zerteilt werden. |
| 2 | Deutliche Verfestigung. Es ist einiger Aufwand erforderlich ist, um den Pulverlack zu dispergieren. Agglomerate lassen sich durch Druck von Hand zerteilen. |
| 3[1)] | Erhebliche Verfestigung, sodass es schwierig oder unmöglich ist, den Pulverlack zu dispergieren. Agglomerate sind sehr stabil und erfordern die Anwendung maschineller Mittel zum Zerteilen. |

(fortgesetzt)

| Kennzahl | Ausmaß von Verfestigung oder Agglomeratbildung |
|---|---|
| 1) Wenn ein Produkt mit der Kennzahl 3 eingestuft wird, sollte in Erwägung gezogen werden, ob eine weitere Prüfung notwendig ist, da der Pulverlack wahrscheinlich nicht zufrieden stellend angewendet werden kann. | |

**Tabelle 4: Ergebnisse der Lagertests:**

| Probe | Kennzahl Lagertest |
|---|---|
| Beispiel 1 | 0 |
| Beispiel 2 | 0 |
| Beispiel 3 | 0 |
| Beispiel 4 | 0 |
| Beispiel 5 | 0 |
| Beispiel 6 | 0 |
| Beispiel 7 | 0 |
| Vergleichsbeispiel 1 | 3 |
| Vergleichsbeispiel 2 | 3 |

Sämtliche erfindungsgemäßen Beispiele sowie die Vergleichsbeispiele 2 bis 5 wiesen eine hervorragende Lagerstabilität auf (Kennzahl 0). Die Lagerstabilität der Vergleichsbeispiele 1 und 2 jedoch konnten nur mit Kennzahl 3 bewertet werden.

Die verbesserte Lagerstabilität ist sehr wahrscheinlich auf den erhöhten Kristallisationsgrad der Bindemittelbeschichtungen der erfindungsgemäßen Beispiele zurückzuführen.

**B 1.2: Haftungsbeständigkeit der Polymerschicht:**

Ein wichtiges Kriterium des erfindungsgemäßen Produktes ist die Haftung der Harzschicht auf der Effektpigmentoberfläche. Starker Belastung ist die Harzschicht bei den Produktionsschritten Trocknung und Siebung unterworfen sowie bei den weiteren Verarbeitungsschritten beim Anwender der erfindungsgemäßen Produkte.

Um die Haftung zu der Harzschicht auf der Effektpigmentoberfläche zu bestimmen, wurden die Muster der erfindungsgemäßen Beispiele 1, 6 und 7 einer Bestimmung der Teilchenzahl und - größe unterzogen. Hierbei wurden Größenmessungen in einem Sysmex FPIA-3000S vorgenommen. Der $CE_{50}$-Wert ist derjenige Größenwert, bei dem 50 % der Äquivalentkreisgröße der gemessenen Partikel in einer Summengrößenverteilung kleiner als dieser Wert sind (Zahlenmittel). Das Gerät verfügte über eine Ultraschalleinheit zur Dispergierung der Muster. Diese beträgt 15 Watt bei einstellbarer Amplitude und bei einer Frequenz von 30 kHz.

Die Muster wurden ohne Ultraschallbelastung gemessen und zur Simulation mechanischer Belastungen bei Verarbeitungsschritten mit Ultraschall mit 20% und 60% Amplitude gemessen

Die folgende Tabelle 5 illustriert die Ergebnisse:

Tabelle 5: $CE_{50}$-Werte sowie die gemessene Teilchenzahl (bestimmt mit Sysmex FPIA 3000S):

| Meßgrößen | Probe | Ultraschall 15 W, Frequenz 30 kHz | | |
|---|---|---|---|---|
| | | Amplitude | | |
| | | ohne | 20% | 60% |
| $CE_{50}$ / $\mu$m | Beispiel 7 | 3,20 | 1,98 | 1,80 |
| | Beispiel 6 | 2,79 | 1,64 | 1,58 |

(fortgesetzt)

| Meßgrößen | Probe | Ultraschall 15 W, Frequenz 30 kHz | | |
|---|---|---|---|---|
| | | Amplitude | | |
| | | ohne | 20% | 60% |
| Teilchenzahl | Beispiel 7 | 1958 | 5482 | 7066 |
| | Beispiel 6 | 2810 | 8484 | 10992 |

Die Proben des Beispiels 6 wiesen durchweg geringere $CE_{50}$-Werte und höhere Teilchenzahlen als jene des Beispiel 7 auf. Dies ist auf vermehrte Nebenfällungen der Polymerbeschichtung zurückzuführen. Diese Nebenfällungen sind meist wesentlich kleiner als die Effektpigmente. Mit steigender Amplitude und damit steigendem Energieeintrag der Ultraschallbehandlung sinken die $CE_{50}$-Werte in beiden Fällen. Offenbar werden hier die Pigmente zerkleinert bzw. es findet eine teilweise Abrasion der Polymerbeschichtung statt.

Mithin ist die Polymerbeschichtung beim Beispiel 7 besser auf der Pigmentoberfläche gebunden als bei Beispiel 6, was wahrscheinlich auf die Haftungsvermittlung des Epoxysilans zurückzuführen ist.

**B2 Analytische Untersuchungen**

**B 2.1 DSC-Messungen:**

In Analogie zu den Vorversuchen wurden DSC-Untersuchungen mittels eines Gerätes der Fa. Netzsch (Typ STA 449 F3 Jupiter) anhand der erfindungsgemäßen Beispiele vorgenommen. Analytisch wurden die Bindemittelgehalte der beschichteten Effektpigmente bestimmt. Die Kurvenverläufe der DSC-Messungen entsprachen jenen der Vorversuche. Die Lage der Onset- und Maximumstemperaturen der endothermen Peaks entsprachen weitgehend jenen der korrespondierenden Vorversuche. Die Enthalpien der endothermen Peaks wurden auf diese Bindemittelmengen umgerechnet. Es ergab sich eine sehr gute Übereinstimmung zu den Vorversuchen mit Abweichungen im Bereich von +/- 5 %.

**B 2.2 PXRD Pulverdiffraktogramme**

Alle Pulverdiffraktionsmessungen wurden an einem STOE StadiP Diffraktometer in Debye-Scherrer-Geometrie in Transmission bei Raumtemperatur gemessen. Das Diffraktometer ist mit Kupferstrahlung und einem Germaniummonochromator (111) ausgestattet, so dass nur die $Cu_{K\alpha 1}$-Bande ($\lambda$ = 1,5406 Å) zur Beugung verwendet wird. Die Leistung des Generators wurde auf 40 kV und 40 mA einjustiert, um ein optimales Verhältnis von Untergrund zu Braggstreuung zu gewährleisten. Zur Einschränkung der Strahldivergenz wurde ein 0,5 mm Kollimator vor der Probe verwendet. Alle Messungen wurden in einem 2$\Theta$-Bereich zwischen 5° und 70° mit einem Mythen-Detektor (Fa. Dectris) mit einem Detektionsfenster von 64x8 mm durchgeführt, was einem Öffnungswinkel von 19° in 2$\Theta$ entspricht. Der Detektor wurde in 0,2° Schritten und einer Belichtungszeit von 90 s für jeden Schritt gefahren. Die einzelnen Messungen werden summiert. Dies führt zu einer Messzeit von 8 h und 8 min für jede Probe. Die Proben wurden in 0,3 mm Borosilicatglaskapillaren (Fa. Hilgenberg, Markröhrchen) präpariert.

**B 2.3 $C^{13}$-MAS NMR Übersichtsmessungen**

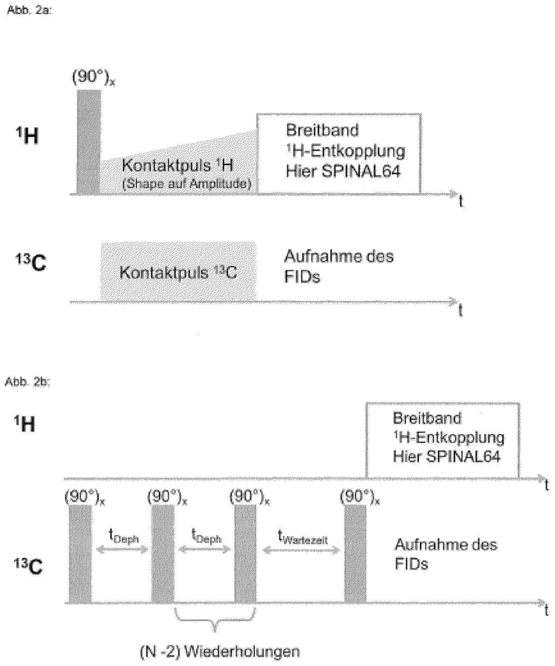

Alle hochauflösenden eindimensionalen $^{13}$C NMR Spektren (z.B. Abb. 4 und 6) wurden an einem Avance III HD Fourier-Transform-NMR-Spektrometer der Firma Bruker aufgenommen. Das Spektrometer ist mit drei Kanälen und einem "wide bore" Magneten (Kryomagnet) mit einer Magnetfeldstärke von 9,4 T ausgestattet. Dies entspricht Larmorfrequenzen von 400,13 MHz für $^1$H-Kerne und von 100,62 MHz für $^{13}$C-Kerne. Die Proben wurden in 4 mm Zirkondioxidrotoren gefüllt und in einen 4 mm MAS Doppelresonanzprobenkopf der Firma Bruker überführt. Während der Messungen betrug die Rotationsfrequenz des Probenbehälters 12,5 kHz für die reinen Polymere (Vorversuchsbeispiele 1, 10 und 15 sowie Vorversuchsvergleichsbeispiele 1, 10 und 15) und 8,0 kHz für die beschichteten Aluminiumpartikel (Beispiel 1). Die Anregung erfolgte mittels Kreuzpolarisation unter Verwendung eines CW-Impulses auf dem $^{13}$C-Kanal und eines Shape-Pulses auf dem $^1$H-Kanal. Mittels des Shape-Pulses wurde die $^1$H-Polarisation in üblicher Weise auf die $^{13}$C-Kerne übertragen. Abb. 2a skizziert die verwendeten Pulsfolgen.

Während des Shape-Pulses wurde die Pulsamplitude linear um einen Faktor zwei während des Hartmann-Hahn-Blocks gesteigert wird. Der initiierende Protonen-90° Impuls wurde auf eine Länge von 2,5 $\mu$s justiert und die Nutationsfrequenzen von $^1$H und $^{13}$C während des Hartmann-Hahn-Blocks betrugen 65 kHz (gemittelt über Shape) und 53 kHz. Die Hartman-Hahn-Bedingung zur Übertragung der Magnetisierungen von den Protonen auf die $^{13}$C-Kerne lautet bekanntlich: $<\nu(^1H)> - \nu(^{13}C) = n^* \nu_{rot}$ mit n in der Regel = ±1. Eine Dauer des Hartmann-Hahn-Blocks (Kontaktzeit) von 3 ms lieferte optimale Transfereffizienzen. Die Wiederholzeit von 1 s wurde so gewählt, dass in allen Fällen mehr als 90% der Protonenmagnetisierung ins thermische Gleichgewicht relaxieren konnten. Während der Aufnahme des FIDs erfolgte Breitbandprotonenentkopplung mittels einer SPINAL64-Sequenz (beschrieben in B.M. Fung, A.K. Khitrin, K. Ermolaev, J. Magn. Reson. 2000, 142, 97-104), bei der die Protonennutationsfrequenz auf 73 kHz und das Zeitintervall zwischen den einzelnen Phasenshifts auf 7,2 µs eingestellt waren. Bei einer Akquisitionszeit von 40 ms wurden 4.096 Punkte für den FID (Free Induction Decay) aufgenommen. Während für die reinen Polymerproben (Vorversuche) 4.096 Transienten akkumuliert wurden, erforderte die geringe Sensitivität im Falle der beschichteten Aluminiumpartikel (Beispiel 1) 51.600 Wiederholungen. Die 1D Spektren wurden durch anschließende Fouriertransformation mit einem "Zerofilling" von 4096 Punkten und einer Faltung mit einer Lorentzlinie mit einer Halbwertsbreite von 10 Hz erhalten. Alle Chemischen Verschiebungen für $^{13}$C sind relativ zum Standard TMS (0 ppm) angegeben.

$^{13}$C-MAS NMR Übersichtsmessungen wurden für die Polymerproben der Vorversuchsbeispiele 1, 10 und 17 (spontan gefällte Polymere) sowie der entsprechenden Vorversuchsvergleichsbeispiele 1, 10 und 17 (Polymerproben im Ausgangszustand) sowie für Beispiel 1 angefertigt. Die Abb. 4 zeigt beispielhaft die Spektren von Beispiel 1, Vorversuchsbeispiel 1 und Vorversuchsvergleichsbeispiel 1. Eingezeichnet sind auch die chemischen Formeln der Strukturelemente des Polyesters und ihre Zuordnung zu den Peaks im NMR-Spektrum.

Abb. 6 zeigt beispielhaft die Spektren von Beispiel 10, Vorversuchsbeispiel 10 und Vorversuchsvergleichsbeispiel 10. Deutlicher ist im Vergleich zur Abb. 4 im Bereich von 130 ppm eine Doppelstruktur aufgrund des hohen Terephthalsäureanteils des Bindemittels zu erkennen.

Die gefällten, teilkristallinen Polymere zeigen jeweils klar besser strukturiertere $^{13}$C-NMR-Spektren als die ungefällten, amorphen Polymere. Bei dem beschichteten Aluminiumpigment (Beispiel 1) sind die Strukturen nicht ganz zu ausgeprägt wie bei dem reinen Polymer (Vorversuchsbeispiel 1). Dies dürfte auf die größeren Suszeptibilitätsunterschiede in dieser Probe zurückzuführen sein.

Die Halbwertsbreiten der $^{13}$C MAS-Spektren lagen für die amorphen Proben (Vorversuchsvergleichsbeispiele 1, 10 und 17) zwischen 250 und 350 Hz und für die teilkristallinen Polymere (Vorversuchsbeispiele 1, 10 und 17) zwischen 100 und 180 Hz. Die der beschichteten Al-Partikel (Beispiel 1) lag zwischen 180 und 270 Hz.

Da aus den Halbwertsbreiten alleine nicht auf den Kristallisationsgrad rückgeschlossen werden konnte, wurden zusätzlich $^{13}$C-NMR MAS Relaxationsmessungen durchgeführt.

### B 2.4 $^{13}$C-NMR MAS Relaxationsmessungen:

Alle Messungen der $^{13}$C Spin-Gitter-Relaxation ($T_1$) wurden an einem Avance II Fourier-Transform-NMR-Spektrometer der Firma Bruker durchgeführt. Dieses Spektrometer ist mit drei Kanälen und einem "wide bore"-Magneten mit einer Magnetfeldstärke von 7,05 T ausgestattet. Dies entspricht Larmorfrequenzen für $^1$H und $^{13}$C von 300,15 MHz und 75,48 MHz. Die Proben wurden in 7 mm Zirkondioxidrotoren gefüllt und in einen 7 mm MAS Trippelresonanzprobenkopf der Firma Bruker überführt. Während der Messungen betrug die Rotationsfrequenz des Probenbehälters 6 kHz. Die geringe Rotationsfrequenz wurde gewählt, um den Einfluss der Rotationsfrequenz auf die Spin-Gitter-Relaxation durch Quenchen der Spindiffusion im Protonenbad zu minimieren. Die Aufnahme erfolgte mit einer Sättigungssequenz. Der Sättigungsblock enthielt zehn $^{13}$C-90°-Impulse mit einer Länge von 3,5 µs für die reinen Polymere der Vorversuchsbeispiele und -vergleichsbeispiele und 7,0 µs für die beschichteten Al-Partikel (Beispiel 1) sowie einem Dephasierungsintervall von 20 ms zwischen diesen. Am Ende des Sättigungsblocks betrug die Restmagnetisierung weniger als 0,1 %, wobei der größte Anteil des Magnetisierungsrückgangs durch die schnelle Relaxation der Methylresonanz verursacht wurde. An den Sättigungsblock schloss sich eine variable Wartezeit zwischen 100 µs und 1400 s an, in der sich die longitudinale Magnetisierung, abhängig von dieser Wartezeit und der Zeitkonstanten $T_1$, wieder aufbaut. Die Wartezeiten wurden mit einem exponentiellen Abstand so gewählt, dass in jeder vollen Dekade sechs Werte gemessen wurden. Zur Detektion der wieder aufgebauten Polarisation wurde diese durch einen 90°-Lesepuls auf dem $^{13}$C-Kanal mit einer Länge von wiederum 3,5 µs und 7,0 µs in transversale, beobachtbare Magnetisierung überführt. Der resultierende FID wurde mit einer Akquisitionszeit von 15 ms und 2048 Punkten unter Breitbandprotonenentkopplung mit einer SPINAL64-Sequenz aufgenommen. Für letztere betrug die Protonennutationsfrequenz 75 kHz und das Zeitintervall zwischen den einzelnen Phasenshifts 7,4 µs. Im Falle der reinen Polymerproben (Vorversuchsbeispiele und - vergleichsbeispiele) wurden für jeden FID bei jeder Wartezeit 64 Transienten aufgenommen. Für die beschichteten Al-Partikel (Beispiel 1) betrug die Zahl der Wiederholungen für jeden FID 1200. Abb. 2b gibt schematisch einen Überblick über die verwendeten Pulsfolgen.

Um eine frequenzaufgelöste Auswertung der Spin-Gitter-Relaxation zu ermöglichen, wurden die erhaltenden pseudo-2D-Daten entlang der F2-Domäne Fourier-transformiert. Hierzu wurde ein "Zerofilling" von 2048 Punkten und eine Faltung mit einer Lorentzlinie mit einer Halbwertsbreite von 50 Hz verwendet. Alle Chemischen Verschiebungen für $^{13}$C sind wiederum relativ zum Standard TMS (0 ppm) angegeben. Die so gewonnenen Spektren wurden basislinienbereinigt, indem die Spektren für die kürzeste Wartezeit, die noch keine nennenswerte spektrale Intensität enthielten, mit einer "cubic spline"-Interpolation angepasst wurden. Die resultierende Ausgleichskurve wurde dann von allen anderen Spektren abgezogen. Anschließend erfolgte die Integration über die Resonanzen der charakteristischen chemischen Baueinheiten durch Summation der Intensitäten. Für die Basislinienkorrektur und Integration wurde das Programmpaket Matlab Version R2014b (8.4.0.150421) der Firma MathWorks verwendet. Folgende spektralen Bereiche wurden integriert: 17-28 ppm (Me-), 61-78 ppm (-$CH_2$-), 30-40 ppm ($C_q$), 124 -140 ppm (-$C_{aromatisch}$-) und 160-170 ppm (-$CO_2$-). Die integralen Intensitäten' wurden als Funktion der Wartezeit t biexponentiell mittels Gleichung (1) angepasst. Hierzu wurde ein Levenberg-Marquardt-Algorithmus in seiner Implementierung im Programm gnuplot (Version 4.6 patchlevel 5) mit einer Wichtung von 1,0 für jeden Datenpunkt in der Summe der kleinsten Fehlerquadrate verwendet.

$$M\left(t, M_0, a, c, T_1^s, T_1^l\right) = M_0 \cdot \left[\left(1-c\right) \cdot \left(1 - a \cdot e^{-\left(\frac{t}{T_1^s}\right)}\right) + c \cdot \left(1 - a \cdot e^{-\left(\frac{t}{T_1^l}\right)}\right)\right] \qquad \text{(II)}$$

Die Anpassung der Gleichgewichtsmagnetisierung $M_0$ erfolgte separat als Mittelwert der Intensitäten für die größten Wartezeiten und wurde in den globalen Verfeinerungen nicht mehr verändert. Bei dem verwendeten Levenberg-Marquardt-Algorithmus wurden nur die Größen a, c, $T_1^s$ und $T_1^l$ verändert. Hierfür ist bei den Messungen darauf zu achten, dass die Intensitäten mindestens für die letzten drei Messwerte nicht mehr systematisch ansteigen. Parameter a berücksichtigt von Null verschiedene Anfangsmagnetisierungen und ist daher als technische Variable für die Verfeinerung zu betrachten, die ansonsten für die Bestimmung des kristallinen Anteils in den Polymeren und beschichteten Al-Partikeln nicht relevant ist. Parameter a spiegelt die Effizienz des Sättigungsblocks und der Basislinienkorrektur wieder und sollte bei vollständiger Elimination der Magnetisierung bei t = 0 nahe 1,0 liegen. Für die hier durchgeführten Messungen schwankte a zwischen 0,92 und 1,1.

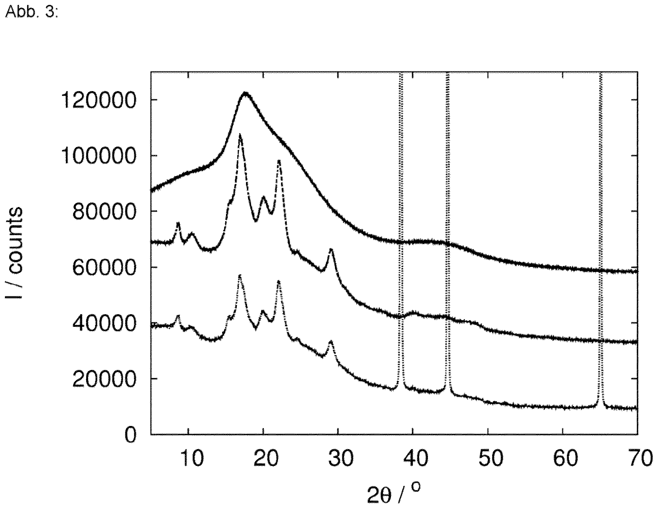

Somit verbleiben für die Bestimmung des Kristallinitätsgrads drei Variablen - die beiden Zeitkonstanten der Spin-Gitter-Relaxation $T_1^s$ und $T_1^l$ sowie die Wichtung c. $T_1^s$ und $T_1^l$ unterschieden sich sehr deutlich und konnten daher gut separiert werden. Zusammen mit den Pulverdiffraktogrammen (Abb. 3) legt dies eine heterogene Beschaffenheit der Proben nah, bei dem ein ungeordneter (amorpher) und geordneter (kristalliner) Bereich unterschieden werden können. Die schnelle Spin-Gitter-Relaxation mit der Zeitkonstanten $T_1^s$ wird aufgrund der effizienteren Relaxation dem amorphen Bereich, in dem eine stärkere Dynamik zu erwarten ist, zugeordnet. Entsprechend ist $T_1^l$ für den kristallinen Bereich charakteristisch. Die Konstante c beschreibt entsprechend den Anteil der kristallinen Bereiche in Atomprozent. Die Abb. 5 und 7 zeigen beispielhaft den typischen Verlauf der Relaxationsstärke $\Phi = (M_0 - M(t))/M_0$ gegen die Wartezeit t. Die y-Achse ist logarithmisch aufgetragen, so dass die individuellen Relaxationskomponenten als Geraden erscheinen.

Die Ergebnisse der Auswertungen der durchgeführten Relaxationsmessungen sind in Tab. 6 dargestellt. Hierbei wurden die Signale der Methylgruppen nicht berücksichtigt, da diese bekanntlich aufgrund der Spin-Rotations-Relaxation zwischen C- und benachbartem H-Atomen sehr schnell relaxieren, so dass kein Unterschied zwischen kristallinem und amorphem Anteil detektiert werden kann.

Tabelle 6: Ergebnisse der Auswertungen der $^{13}C$-MAS-Realaxationsmessungen

| Bindemittel/ Probe: | Ermittelte Größe | - $CO_2$ - | $C_{ar}$ | - $CH_2$ - | $C_q$ | Mittelwerte ermittelter Größen c, $T_1^s$ und $T_1^l$ |
|---|---|---|---|---|---|---|
| CC 4540-0 "AGM" (amorph) Vorversuchsvergleichsbeispiel 1 | $M_0$ | 2,02 | 6,49 | 1,75 | 1,06 | |
| | a | 1,00 | 1,00 | 1,00 | 1,00 | |
| | c | 0,66 | 0,81 | 0,64 | 0,64 | **0,69** |
| | $T_1^s$ / s | 16 | 7,2 | 2,1 | 4,8 | **7,5** |
| | $T_1^l$ / s | 73 | 45,9 | 28 | 22 | **42,2** |

(fortgesetzt)

| Bindemittel/ Probe: | Ermittelte Größe | - $CO_2$ - | $C_{ar}$ | - $CH_2$ - | $C_q$ | Mittelwerte ermittelter Größen c, $T_1^s$ und $T_1^l$ |
|---|---|---|---|---|---|---|
| (CC 2506-1 "AGM") Vorversuchsvergleichsbeispiel 10 | $M_0$ | 3,12 | 8,33 | 2,82 | 1,87 | |
| | a | 1,00 | 0,99 | 0,98 | 0,99 | |
| | c | 0,73 | 0,74 | 0,66 | 0,4 | **0,63** |
| | $T_1^s$ / s | 12,2 | 4,4 | 1,2 | 8,3 | **6,5** |
| | $T_1^l$ / s | 55,4 | 43,2 | 24,1 | 36 | **39,7** |
| (Sirales PE 7499 "AGM") Vorversuchsvergleichsbeispiel 15 | $M_0$ | 2,28 | 6,01 | 2,09 | 1,18 | |
| | a | 1,00 | 1,00 | 0,98 | 1,00 | |
| | c | 0,79 | 0,75 | 0,65 | 0,79 | **0,75** |
| | $T_1^s$ / s | 11,5 | 9,4 | 1,6 | 1,6 | **6,0** |
| | $T_1^l$ / s | 71,4 | 61,1 | 35,9 | 22,8 | **47,8** |
| CC 4540-0 "Nd" Vorversuchsbeispiel 1 | $M_0$ | 1,15 | 3,15 | 0,76 | 0,59 | |
| | a | 1,10 | 1,00 | 1,00 | 1,03 | |
| | c | 0,77 | 0,54 | 0,47 | 0,33 | **0,5275** |
| | $T_1^s$ / s | 1,6 | 14 | 9,6 | 7,2 | **8,1** |
| | $T_1^l$ / s | 93 | 140 | 83 | 77 | **98,25** |
| CC 4540-0 beschichtetes Al-Substrat Beispiel 1 | $M_0$ | 7,5 | 19,8 | 2,8 | 3,4 | |
| | a | 1,002 | 0,964 | 0,95 | 1,02 | |
| | c | 0,69 | 0,76 | 0,73 | 0,65 | **0,7075** |
| | $T_1^s$ / s | 14,9 | 8,8 | 0,5 | 1,3 | **6,4** |
| | $T_1^l$ / s | 123 | 84,6 | 57 | 29,8 | **73,6** |
| CC 2506-1 "Nd" Vorversuchsbeispiel 10 | $M_0$ | 2,49 | 6,25 | 2,11 | 1,29 | |
| | a | 1,00 | 0,99 | 0,99 | 0,99 | |
| | c | 0,73 | 0,62 | 0,72 | 0,33 | **0,6** |
| | $T_1^s$ / s | 10,2 | 12,5 | 2,1 | 7,4 | **8,1** |
| | $T_1^l$ / s | 105 | 103 | 50,1 | 47 | **76,3** |
| Sirales PE 7499 "ND" Vorversuchsbeispiel 15 | $M_0$ | 1,79 | 4,27 | 1,58 | 0,86 | |
| | a | 1,00 | 0,99 | 0,98 | 0,99 | |
| | c | 0,68 | 0,63 | 0,75 | 0,7 | **0,69** |
| | $T_1^s$ / s | 16,8 | 14,8 | 2,1 | 4 | **9,4** |
| | $T_1^l$ / s | 116 | 114 | 57 | 23,4 | **77,6** |

Zur Auswertung wurden jeweils die Relaxationen der $^{13}C$-Kerne der Säuregruppen (abgekürzt - $CO_2$-), der aromatischen Gruppe der Säurekomponente (abgekürzt $C_{ar}$) sowie die Methylengruppen (abgekürzt -$CH_2$-) und das quartäre C-Atom (abgekürzt $C_q$) der Neopentylalkoholkomponente herangezogen. Die Methylgruppen wurden aufgrund ihrer bekanntermaßen sehr schnellen Relaxation nicht herangezogen. Für die ermittelten Werte c, $T_1^s$ und $T_1^l$ wurden

jeweils die Mittelwerte aller einzelnen Gruppen verwendet, was der üblichen Vorgehensweise bei dieser Methode entspricht.

Deutlich unterscheiden sich die dem amorphen Anteil zugeordneten kurzen Relaxationsfrequenzen von den dem kristallinen Anteil zugeordneten langen Relaxationsfrequenzen. Das erfindungsgemäße Beispiel 1 und die Vorversuchsbeispiele 1, 10 und 15 weisen deutlich höhere Relaxationszeiten $T_1^I$ (73,6 bis 98,25 s) auf als die entsprechenden Vorversuchsvergleichsbeispiele (39,7 bis 47,8 s). Im Parameter c allerdings sind keine eindeutige Abgrenzungen wie bei der Größe $T_1^I$ zu erkennen. Alle untersuchten Proben weisen Kristallisationsgrade c von ca. 70 % auf.

Diese Befunde kann man insgesamt so interpretieren, dass die ungefällten Bindemittelpolymere bereits eine gewisse Präordnung mit einer sehr geringen räumlichen Ausdehnung aufweisen. Bei den gefällten Bindemittelpolymeren nehmen die geordneten Bereiche räumlich jedoch stark zu, was zu längeren Relaxationszeiten $T_1^I$ führt.

Da die hier geschilderten $^{13}$C-NMR Relaxationsmessungen eine auf molekularer Ebene äußerst empfindliche Methode ist, können auch Bereiche mit einer sehr geringen Ordnung bereits zu hohen c-Werten führen. Mit der Methode werden lokale Ordnungen im Polymer ab bereits ca. 3 bis 4 Elementarzellen detektiert.

Diese Interpretation der NMR-Befunde passen sehr gut zu den Ergebnissen der PXRD-Untersuchungen Dort zeigten die ungefällten Proben der Vorversuchsvergleichsbeispiele stets unstrukturierte Spektren. Eine hier bereits vorhandene Präordnung der Polymere war offenbar räumlich zu gering ausgeprägt, um Signale in der Debye-Scherrer Geometrie zu geben. Bei dieser auf eher langreichende Wechselwirkungen beruhenden Methode erhält man erst strukturierte Signale, wenn mindestens ca. zwanzig Elementarzellen der kristallinen Bereiche vorhanden sind. Die gefällten Polymere zeigten sowohl bei den reinen Polymerproben (Vorversuchsbeispiele) als auch bei dem auf die Al-Plättchen aufgefälltem Polymer (Beispiel 1) klar strukturierte Spektren. Bei den NMR-Relaxationsversuchen führten die stark gestiegene Domänengröße der kristallinen Anteile der gefällten Polymere zu den beobachteten höheren Relaxationszeiten $T_1^I$

## Patentansprüche

1. Beschichtetes Effektpigment, umfassend ein plättchenförmiges Substrat und eine darauf aufgebrachte Beschichtung umfassend ein Bindemittel für Pulverlack,
   **dadurch gekennzeichnet,**
   **dass** es in einem DSC-Diagramm bei einer Vorlaufgeschwindigkeit von 5 °C/min mindestens einen endothermen Peak mit einem Maximum aus einem Bereich von $T_{max}$ = 100 bis 150 °C sowie einer zu diesem Peak zugehörigen Enthalpie $\Delta H$ aus einem Bereich von 15 J/g bis 80 J/g aufweist, wobei die Enthalpie auf die Menge des Bindemittels berechnet wird und wobei das Bindemittel das Polyesterfunktionen aufweist und über eine Schmelzpolymerisation hergestellt wird.

2. Beschichtetes Effektpigment nach Anspruch 1,
   **dadurch gekennzeichnet,**
   **dass** das Bindemittel eine Erhöhung der Schmelzenthalpie im DSC $\Delta T_{Max}$ vom kristallisierten Zustand im Vergleich zum unkristallisierten Zustand aus einem Bereich von 40 bis 75 °C aufweist.

3. Beschichtetes Effektpigment nach Anspruch 1 oder 2,
   **dadurch gekennzeichnet,**
   **dass** das Bindemittel in die PXRD -Diffraktogramme, aufgenommen in der Debye-Scherrer Geometrie mit einer Kapillare mit 0,3 mm Durchmesser, wobei als Röntgenquelle Cu K$\alpha$1 und als Monochromator Germanium(111) mit einer Schlitzbreite von 0,5 mm verwendet wird, strukturierte Peaks aufzeigt mit Halbwertsbreiten im Bereich von 0,7 bis 2,0° (in 2$\theta$).

4. Beschichtetes Effektpigment nach einem der Ansprüche 1 bis 3,
   **dadurch gekennzeichnet,**
   **dass** das Bindemittel kein LCST- oder UCST-Polymer ist.

5. Beschichtetes Effektpigment nach einem der Ansprüche 1 bis 3,
   **dadurch gekennzeichnet,**
   **dass** das Bindemittel ein Polyester enthaltend Säure- und Alkoholkomponenten ist und als Säurekomponenten einen Hauptteil aus Monomeren der Gruppe bestehend aus Isophthalsäure und Terephthalsäure und deren Mischungen, entnommen wird.

6. Beschichtetes Effektpigment nach einem der Ansprüche 1 bis 3,

**dadurch gekennzeichnet,**

**dass** das Bindemittel als Säurekomponente zumindest 14 mol-% Isophthalsäure, bezogen auf alle Säurekomponenten, enthält.

**7.** Beschichtetes Effektpigment nach einem der Ansprüche 1 bis 3,
**dadurch gekennzeichnet,**
**dass** das Bindemittel als Alkoholkomponente einen Anteil von Neopentylglycol und/oder 2-Butyl-2-ethyl-1,3-propandiol von 50 bis 100 mol-%, bezogen auf alle Alkoholkomponenten, enthält.

**8.** Beschichtetes Effektpigment nach Anspruch 7,
**dadurch gekennzeichnet,**
**dass** hinsichtlich der Alkoholkomponenten des Polyesters dieser ein Mol-Verhältnis von Ethylenglycol zu Neopentylglycol und/oder 2-Butyl-2-ethyl-1,3-propandiol von kleiner als 20 % aufweist.

**9.** Beschichtetes Effektpigment nach einem der vorstehenden Ansprüche,
**dadurch gekennzeichnet,**
**dass** das plättchenförmige Substrat der Gruppe bestehend aus Metalleffektpigmente, Perlglanzpigmente und Interferenzpigmente sowie deren Mischungen, entnommen werden.

**10.** Beschichtetes Effektpigment nach Anspruch 1 bis 9
**dadurch gekennzeichnet,**
**dass** es sich bei dem plättchenförmigen Substrat um ein mit einem Metalloxid beschichtetes Metalleffektpigment oder um ein Perlglanzpigment handelt.

**11.** Beschichtetes Effektpigment nach Anspruch 10,
**dadurch gekennzeichnet,**
**dass** das Metalloxid der Gruppe bestehend aus Silizium(di)oxid, Siliziumoxidhydrat, Siliziumhydroxid, Aluminiumoxid, Aluminiumoxidhydrat, Aluminiumhydroxid und deren Mischungen, entnommen wird.

**12.** Verwendung eines beschichteten Effektpigments nach einem der Ansprüche 1 bis 11 in Lacken, Pulverlacken, Druckfarben, Toner oder Kunststoffen.


**Claims**

**1.** Coated effect pigment comprising a platelet-shaped substrate and a coating applied thereon and comprising a binder for powder coating,
**characterized**
**in that** in a DSC diagram at a rate of advance of 5°C/min it exhibits at least one endothermic peak having a maximum from a range of $T_{max}$ = 100 to 150°C and also having an enthalpy $\Delta H$ associated with this peak from a range from 15 J/g to 80 J/g, the enthalpy being calculated on the amount of the binder, and the binder having polyester functions and being prepared via a melt polymerization.

**2.** Coated effect pigment according to Claim 1,
**characterized**
**in that** the binder exhibits an increase in the enthalpy of fusion in the DSC $\Delta T_{max}$ of the crystallized state, in comparison to the uncrystallized state, from a range from 40 to 75°C.

**3.** Coated effect pigment according to Claim 1 or 2,
**characterized**
**in that** the binder in the PXRD diffractogram recorded in the Debye-Scherrer geometry with a capillary 0.3 mm in diameter, using Cu K$\alpha$1 as x-ray source and using germanium(111) with a slit width of 0.5 mm as monochromator, has structured peaks with full widths at half maximum in the range from 0.7 to 2.0° (in 2$\theta$).

**4.** Coated effect pigment according to any of Claims 1 to 3,
**characterized**
**in that** the binder is not an LCST or UCST polymer.

**5.** Coated effect pigment according to any of Claims 1 to 3, **characterized in that** the binder is a polyester containing acid and alcohol components and as acid components a main fraction is taken from monomers of the group consisting of isophthalic acid and terephthalic acid and mixtures thereof.

**6.** Coated effect pigment according to any of Claims 1 to 3, **characterized in that** the binder comprises as acid component at least 14 mol% of isophthalic acid, based on all the acid components.

**7.** Coated effect pigment according to any of Claims 1 to 3, **characterized in that** the binder contains as alcohol component a fraction of neopentyl glycol and/or 2-butyl-2-ethyl-1,3-propanediol of 50 to 100 mol%, based on all the alcohol components.

**8.** Coated effect pigment according to Claim 7, **characterized in that** with regard to the alcohol components of the polyester it has a molar ratio of ethylene glycol to neopentyl glycol and/or 2-butyl-2-ethyl-1,3-propanediol of less than 20%.

**9.** Coated effect pigment according to any of the preceding claims, **characterized in that** the platelet-shaped substrate is taken from the group consisting of metallic effect pigments, pearlescent pigments, and interference pigments, and also mixtures thereof.

**10.** Coated effect pigment according to Claim 1 to 9, **characterized in that** the platelet-shaped substrate is a pearlescent pigment or is a metallic effect pigment coated with a metal oxide.

**11.** Coated effect pigment according to Claim 10, **characterized in that** the metal oxide is taken from the group consisting of silicon (di)oxide, silicon oxide hydrate, silicon hydroxide, aluminium oxide, aluminium oxide hydrate, aluminium hydroxide, and mixtures thereof.

**12.** Use of a coated effect pigment according to any of Claims 1 to 11 in paints, powder coatings, printing inks, toners or plastics.


**Revendications**

**1.** Pigment à effet revêtu comprenant un substrat en forme de plaquettes et un revêtement appliqué sur celui-ci comprenant un liant pour une laque en poudre, **caractérisé en ce qu'**il présente, dans un diagramme DSC (calorimétrie différentielle à balayage), à une vitesse d'avance de 5°C/min, au moins un pic endothermique présentant un maximum dans une plage de $T_{max}$ = 100 à 150°C ainsi qu'une enthalpie $\Delta H$ associée à ce pic dans une plage de 15 J/g à 80 J/g, l'enthalpie étant calculée par rapport à la quantité de liant et le liant présentant des fonctions polyester et étant préparé par l'intermédiaire d'une polymérisation en masse fondue.

**2.** Pigment à effet revêtu selon la revendication 1, **caractérisé en ce que** le liant présente une augmentation de l'enthalpie de fusion $\Delta T_{Max}$ dans la DSC de l'état cristallisé par rapport à l'état non cristallisé dans une plage de 40 à 75°C.

**3.** Pigment à effet revêt, selon la revendication 1 ou 2, **caractérisé en ce que** le liant présente des pics structurés d'une largeur à mi-hauteur dans la plage de 0,7 à 2,0° (en 2$\theta$) dans un diffractogramme PXRD (diffractométrie de rayons X sur des poudres), enregistré selon la géométrie Debye-Scherrer à l'aide d'un capillaire d'un diamètre de 0,3 mm, Cu K$\alpha$1 étant utilisé comme source de rayons X et du Germanium(III) d'une largeur de fente de 0,5 mm étant utilisé en tant que monochromateur.

**4.** Pigment à effet revêtu selon l'une des revendications 1 à 3, **caractérisé en ce que** le liant n'est pas un polymère à LCST (température critique inférieure de solution) ni à UCST (température critique supérieure de solution).

**5.** Pigment à effet revêtu selon l'une des revendications 1 à 3, **caractérisé en ce que** le liant est un polyester contenant des composants acides et des composants alcool et, comme composants acides, une partie principale est prise parmi les monomères du groupe constitué par l'acide isophtalique et l'acide téréphtalique et leurs mélanges.

**6.** Pigment à effet revêtu selon l'une des revendications 1 à 3, **caractérisé en ce que** le liant contient, comme composant acide, au moins 14% en mole d'acide isophtalique, par rapport à tous les composants acides.

**7.** Pigment à effet revêtu selon l'une des revendications 1 à 3, **caractérisé en ce que** le liant contient, comme composant alcool, une proportion de néopentylglycol et/ou de 2-butyl-2-éthyl-1,3-propanediol de 50 à 100% en mole, par rapport à tous les composants alcool.

**8.** Pigment à effet revêtu selon la revendication 7, **caractérisé en ce que**, par rapport aux composants alcool du polyester, celui-ci présente un rapport molaire d'éthylèneglycol à néopentylglycol et/ou à 2-butyl-2-éthyl-1,3-propanediol inférieur à 20%.

**9.** Pigment à effet revêtu selon l'une des revendications précédentes, **caractérisé en ce que** le substrat sous forme de plaquettes est pris dans le groupe constitué par les pigments à effet métallique, les pigments nacrés et les pigments à interférences ainsi que leurs mélanges.

**10.** Pigment à effet revêtu selon la revendication 1 à 9, **caractérisé en ce qu'**il s'agit, pour le substrat sous forme de plaquettes, d'un pigment à effet métallique revêtu par un oxyde métallique ou d'un pigment nacré.

**11.** Pigment à effet revêtu selon la revendication 10, **caractérisé en ce que** l'oxyde métallique est pris dans le groupe constitué par le (di)oxyde de silicium, l'oxyde de silicium hydraté, l'hydroxyde de silicium, l'oxyde d'aluminium, l'oxyde d'aluminium hydraté, l'hydroxyde d'aluminium et leurs mélanges.

**12.** Utilisation d'un pigment à effet revêtu selon l'une des revendications 1 à 11 dans des laques, des laques en poudre, des encres d'imprimerie, des toners ou des matériaux synthétiques.

Abb.: 1

EP 3 798 278 B1

Abb. 2a:

**¹H**

$(90°)_x$

Kontaktpuls ¹H
(Shape auf Amplitude)

Breitband
¹H-Entkopplung
Hier SPINAL64

t

**¹³C**

Kontaktpuls ¹³C

Aufnahme des
FIDs

t

Abb. 2b:

**¹H**

Breitband
¹H-Entkopplung
Hier SPINAL64

t

**¹³C**

$(90°)_x$     $(90°)_x$     $(90°)_x$     $(90°)_x$

$t_{Deph}$     $t_{Deph}$     $t_{Wartezeit}$

Aufnahme des
FIDs

t

(N –2) Wiederholungen

Abb. 3:

Abb. 4:

Abb. 5:

Abb. 6:

Abb. 7:

**IN DER BESCHREIBUNG AUFGEFÜHRTE DOKUMENTE**

**In der Beschreibung aufgeführte Patentdokumente**

- EP 1699884 B1
- EP 1893699 B1
- DE 102008060228 A1
- US 7578879 B2
- EP 1332182 B1
- DE 2603211
- DE 1544830
- EP 2479224 A1
- US 20120065298 A1
- EP 2115075 A1
- EP 1950257 A1
- EP 1837380 A1
- EP 477433 B1
- US 20090117281 A1
- EP 2688962 A1
- EP 2773704 A1
- US 6635721 B1
- US 3371108 A
- EP 0521992 B1
- US 6660398 B1
- WO 2001138432 A1
- US 6384102 B1
- WO 2004083326 A1
- WO 200250201 A1
- US 4217426 A
- WO 2004087816 A2
- EP 2125909 B1
- EP 2106412 B1
- EP 2125910 B1
- EP 2240543 B1
- DE 102010049642 A1
- EP 2723779 B1
- EP 2864373 B1

**In der Beschreibung aufgeführte Nicht-Patentliteratur**

- **U. HIRTH ; A. ALBRECHT ; B. SCHREIBER.** *1 PPCJ,* Dezember 2008
- **ISAO ANDO ; TETSUO ASAKURA.** *Solid State NMR of Polymers,* vol. 84
- **E.R. ANDREW ; A. BRANDBURY ; R.G. EADES.** *Nature,* 1959, vol. 183, 1802
- **W. T. DIXON.** *J. Chem. Phys,* 1982, vol. 77, 1800
- **O. N. ANTZUTKIN ; Z. SONG ; X. FENG ; M. H. LEVITT.** *J. Chem. Phys,* 1994, vol. 100, 130
- **S.R. HARTMANN ; E.L. HAHN.** *Phys. Rev.,* 1962, vol. 128, 2042
- **F. LAUPRETRE ; L. MONNERIE ; J. VIRLET.** *Macromolecules,* 1984, vol. 17, 1397
- **W. S. VEEMAN. ; E. M. MENGEN ; H. H. C. DE MOOR.** *Proc. IUPAC I.U.P.A.C. Macromol. Svmp.,* 1982, vol. 2
- **F. C. SCHILLING ; F. A. BOVERY ; A. E. TONELLI.** *Polvm. Marer. Sci. Eng.,* 1984, vol. 50, 256
- **D. A. TORCHIA.** *J. Magn. Reson.,* 1978, vol. 30, 613
- **BLOCH F.** *Phys. Rev.,* 1946, vol. 70, 460-474
- **B.M. FUNG ; A.K. KHITRIN ; K. ERMOLAEV.** *J. Magn. Reson.,* 2000, vol. 142, 97-104